# EUROPEAN PATENT APPLICATION

(11) **EP 4 067 834 A1**
(43) Date of publication of application: **05.10.2022**
(21) Application number: 21193552.3
(22) Date of filing: 27.08.2021
(51) Int. Cl.: G01F 11/00

(54) **DOSING NOZZLE**

(71) Applicant: The Procter & Gamble Company, Cincinnati, OH 45202 (US)
(72) Inventor: BERESCU BOGOMOLOV, Teodor, 1853 Strombeek-Bever (BE); BRANDT SANZ, Miguel, 1853 Strombeek-Bever (BE)
(74) Representative: P&G Patent Belgium UK

(57) **Abstract**

A dosing nozzle (100, 200, 300) for dispensing a liquid composition (50) comprises a nozzle body (110, 210, 310) and a flow restrictor (150, 250, 350). The nozzle body (110, 210, 310) defines a main channel (120, 220, 320) extending at least partially along a longitudinal axis (102, 202, 302) of the nozzle body (110, 210, 310) and configured to receive the liquid composition (50) therein. The nozzle body (110, 210, 310) comprises a tip wall (130, 230, 330) disposed at a tip (132, 232, 332) of the nozzle body (110, 210, 310), the tip wall (130, 230, 330) defining a plurality of orifices (140, 240, 340) extending therethrough and disposed in fluid communication with the main channel (120, 220, 320). The plurality of orifices (140, 240, 340) is configured to receive the liquid composition (50) from the main channel (120, 220, 320) and dispense the liquid composition (50) from the dosing nozzle (100, 200, 300). The flow restrictor (150, 250, 350) is slidably received within the main channel (120, 220, 320). In a closed position (154, 254, 354), the flow restrictor (150, 250, 350) sealingly engages with the nozzle body (110, 210, 310) upstream of the plurality of orifices (140, 240, 340) to prevent a flow (52) of the liquid composition (50) from the main channel (120, 220, 320) to the plurality of orifices (140, 240, 340).

## Description

### FIELD OF THE INVENTION

The present invention relates to a dosing nozzle for dispensing a liquid composition, and an apparatus and a process for manufacturing a water-soluble unit dose article using at least one such dosing nozzle.

### BACKGROUND OF THE INVENTION

Liquid compositions, particularly household and fabric care compositions such as laundry detergent, dishwashing soap, hand soap, and surface cleansers, are a popular choice among consumers. Generally such liquid compositions may be sold within plastic containers or within water-soluble unit dose articles.

The plastic containers oftentimes have a body with a larger bottom end and an opposing tapered neck connecting to a smaller top end. The larger bottom end may allow the container to stand upright on a surface, such as for storage purposes. The smaller top end may be attached to a cap or to a dispenser for dispensing purposes. The smaller top end oftentimes comprise a container opening. The container opening is usually relatively small in area to make it easier for consumers to control the liquid composition that may be poured out of the container.

Generally, the water-soluble unit dose articles are made in part by deforming a first water-soluble film in a mould to create a cavity; filling the cavity with the liquid compositions; closing the cavity with a second water-soluble film and sealing the first and second water-soluble films together; and separating the articles. Optionally, the second water-soluble film can itself comprise further cavities, such that cavities can be 'superposed' on top of one another. Upon addition to water, the first and second water-soluble films may dissolve and release the liquid composition. Consumers find such articles both convenient and efficient for a range of applications.

Manufacturers may use a filling system to dispense the liquid compositions into the container opening or the cavity of the unit dose articles. In many of the filling systems, the containers and/or the unit dose articles are filled through a nozzle having a nozzle opening disposed above or within the container opening or the cavity. The liquid composition may flow through the nozzle opening into the container opening or the cavity.

The manufacturers are continually looking for ways to increase a volumetric flow rate of the liquid compositions during a filling process of a filling system, which may in turn increase a speed and an efficiency of the filling process of the liquid compositions.

In some examples, to compensate for slower filling speeds associated with conventional nozzles, a size of the nozzle opening may be made larger, which may allow higher volumetric flow rates and faster filling cycles. However, a type of liquid composition being dispensed through a large nozzle opening may provide various filling challenges. For example, higher-viscosity liquid compositions may result in a filament or a string that forms and hangs down from the nozzle at the end of a filling cycle following the discharge of a relevant volume of the liquid composition. This filament or string may take some time to break up. The time to break up is typically longer than desired and may impose a limitation on a speed at which consecutive filling cycles can take place, as a succeeding filling cycle initiating before the filament or string breaks up may cause the liquid composition to fall in undesignated areas. In another example, lower-viscosity liquid compositions may splash out of the container openings or the cavities when dispensed quickly. This may also cause the liquid compositions to fall in the undesignated areas. For example, the undesignated area may be seal areas or areas between the cavities. Therefore, splashing and/or stringing of the liquid composition may lead to a poor sealing and an increased risk of leakage.

In some other examples, to compensate for the slower filling speeds associated with conventional nozzles, a nozzle comprising a large number of nozzle openings may be used. However, there may be a limitation on a number and size of nozzle openings that can be placed in one constrained area of a nozzle surface. If the nozzle openings are spaced too close to one another, the liquid composition may join together to form one stream, which in turn, can result in the same aforementioned stringing problems. Further, if the nozzle openings are spaced far apart, fewer openings may be able to fit on the nozzle surface resulting in reduced volumetric flow rate and slower filling speed. Further, a large number of nozzle openings may have a tendency to leak, especially at high throughputs and pressures.

Therefore, there is a need for a dosing nozzle which may reduce stringing or filament formation and leakages while increasing the speed and efficiency of the filling process of the liquid compositions. There is also a need for an apparatus and process for manufacturing water-soluble unit dose articles using a dosing nozzle which may reduce stringing or filament formation and leakages while increasing the speed and efficiency of the filling process of the liquid compositions.

It was surprisingly found that the dosing nozzle according to the present invention overcame these issues.

WO2017214102A1 discloses a multi-hole nozzle component comprising a periphery, an inlet side having an inlet surface, an outlet side opposing said inlet side having an outlet surface, a longitudinal axis extending from said inlet side to said outlet side; and a plurality of first passageways extending through said nozzle component from said inlet side to said outlet side. The plurality of first passageways form a plurality of first openings at said outlet surface. The plurality of first openings are arranged about said longitudinal axis of said nozzle component. Each of said first openings has a first opening area. The multi-hole nozzle component further comprises a plurality of second passageways extending through said nozzle component from said inlet side to said outlet side. The plurality of second passageways form a plurality of second openings at said outlet surface. The plurality of second openings are arranged about said plurality of first openings. Each of said second openings has a second opening area. The second opening area is greater than said first opening area. The multi-hole nozzle component further comprises a plurality of third passageways extending through said nozzle component from said inlet side to said outlet side. The plurality of third passageways form a plurality of third openings at said outlet surface. The plurality of third openings are arranged about said plurality of second openings. The third openings has a third opening area. The third opening area is equal to said second opening area.

### SUMMARY OF THE INVENTION

A first aspect of the present invention is a dosing nozzle for dispensing a liquid composition. The dosing nozzle comprises a nozzle body and a flow restrictor. The nozzle body defines a main channel extending at least partially along a longitudinal axis of the nozzle body and configured to receive the liquid composition therein. The nozzle body comprises a tip wall disposed at a tip of the nozzle body, the tip wall defining a plurality of orifices extending therethrough and disposed in fluid communication with the main channel. The plurality of orifices is configured to receive the liquid composition from the main channel and dispense the liquid composition from the dosing nozzle. The flow restrictor is slidably received within the main channel, and movable between a closed position and an open position. In the closed position, the flow restrictor sealingly engages with the nozzle body upstream of the plurality of orifices to prevent a flow of the liquid composition from the main channel to the plurality of orifices.

A second aspect of the present invention is an apparatus for manufacturing a water-soluble unit dose article comprising at least one dosing nozzle according to the first aspect.

A third aspect of the present invention is a process for manufacturing a water-soluble unit dose article comprising the step of forming an open water-soluble film cavity and filling the cavity with a liquid composition. The liquid composition is dispensed into the cavity via at least one dosing nozzle according to the first aspect.

It was surprisingly found that the engagement of the flow restrictor with the nozzle body upstream of the plurality of orifices to prevent the flow of the liquid composition from the main channel to the plurality of orifices may cleanly shut off the flow of the liquid composition and substantially reduce stringing and dripping of the liquid composition. Therefore, the dosing nozzle may provide minimal or negligible stringing and dripping of the liquid composition. Further, the dosing nozzle may increase a speed and an efficiency of the process for manufacturing a water-soluble unit dose article as stringing and dripping may otherwise impose a limitation on a speed at which consecutive filling cycles can take place. Therefore, the dosing nozzle of the present invention may reduce or eliminate time delays between successive filling cycles due to minimal or negligible stringing and dripping of the liquid composition after the flow restrictor closes the main channel.

### BRIEF DESCRIPTION OF THE DRAWINGS

Fig. 1 is a schematic side view of a nozzle assembly comprising a dosing nozzle according to an example of the present invention.
Fig. 2A is a schematic cross-sectional view of the nozzle assembly comprising the dosing nozzle in an open state.
Fig. 2B is a schematic cross-sectional view of the nozzle assembly comprising the dosing nozzle in a closed state.
Fig. 2C is a detailed view of a portion A of Fig. 2B.
Fig. 3A is a schematic cross-sectional view of a dosing nozzle in an open state according to another example of the present invention.
Fig. 3B is a schematic cross-sectional view of the dosing nozzle of Fig. 3A in a closed state.
Fig. 3C is a detailed view of a portion B of Fig. 3B.
Fig. 4A is a schematic cross-sectional view of a dosing nozzle in an open state according to another example of the present invention.
Fig. 4B is a schematic cross-sectional view of the dosing nozzle of Fig. 4A in a closed state.
Fig. 4C is a detailed view of a portion C of Fig. 4B.
Fig. 5A is a schematic exploded perspective view of a nozzle body according to an example of the present invention.
Fig. 5B is a schematic exploded side view of the nozzle body of Fig. 5A.
Fig. 5C is a schematic exploded cross-sectional view of the nozzle body of Fig. 5A.
Figs. 6A-6D are schematic front perspective views of various tip portions according to different examples of the present invention.
Figs. 7A-7D are schematic front perspective views of various tip portions according to different examples of the present invention.
Figs. 8A-8B are schematic side views of flow restrictors according to different examples of the present invention.
Fig. 9A is a schematic side view of an apparatus for manufacturing a water-soluble unit dose article according to an example of the present invention.
Fig. 9B is a schematic side view of another apparatus for manufacturing the water-soluble unit dose article according to an example of the present invention.
Fig. 10 is a plot depicting an axial force versus an axial distance of a stopper of a conventional nozzle and a flow restrictor of a dosing nozzle according to an example of the present invention.

### DETAILED DESCRIPTION OF THE INVENTION

As used herein, articles such as "a" and "an" when used in a claim, are understood to mean one or more of what is claimed or described.

As used herein, the terms "comprising," "comprises," "include", "includes" and "including" are meant to be non-limiting. The term "consisting of' or "consisting essentially of' are meant to be limiting, i.e., excluding any components or ingredients that are not specifically listed except when they are present as impurities.

As used herein, "at least one of A and B" should be understood to mean "only A, only B, or both A and B".

As used herein, the term "between", unless otherwise specifically defined, generally refers to an inclusive or a closed range. For example, if a parameter X is between A and B, then A ≤ X ≤ B.

As used herein, the term "average width" refers to an arithmetic mean of a maximum width and a minimum width.

As used herein, the term "circular sector" refers to a region bounded by two radii of a circle and the intercepted arc of the circle.

As used herein, the term "quadrant" refers to one of four quarters of a circle.

As used herein, the term "superelliptical" refers to a closed curve having a symmetry about a semi-major axis and a semi-minor axis.

As used herein, the term "polygonal" refers to a closed planer shape bounded by three or more line segments.

As used herein, the term "frustoconical shape" refers to a shape resembling frustum of a cone.

As used herein, the term "frustopyramidal shape" refers to a shape resembling frustum of a pyramid.

As used herein, the term "connected to" encompasses configurations in which an element is directly secured to another element by affixing the element directly to the other element; configurations in which the element is indirectly secured to the other element by affixing the element to intermediate member(s) which in turn are affixed to the other element; and configurations in which one element is integral with another element, i.e., one element is essentially part of the other element. The term "connected to" encompasses configurations in which an element is secured to another element at selected locations, as well as configurations in which an element is completely secured to another element across an entire surface of one of the elements.

As used herein, the term "compartment" is used in the broadest scope to include any bottle, chamber, vessel, box, pouch, such as thermoformed water-soluble film, water-insoluble film, plastic bottles, glass bottles, soluble-unit dose articles, or the like including a breadth of sizes. Compartments can be (but not necessarily) empty, i.e., devoid of fluid, or partially filled when conveyed through dispensing processes.

As used herein, the term "machine direction" (MD) refers to the direction of material flow through a process. In addition, relative placement and movement of material may be described as flowing in the machine direction through a process from upstream in the process to downstream in the process.

As used herein, a "filling cycle" can be measured from a time a nozzle begins dispensing a liquid composition into one compartment, finishes dispensing the liquid composition, and begins dispensing the liquid composition into the next compartment.

### Nozzle Assembly

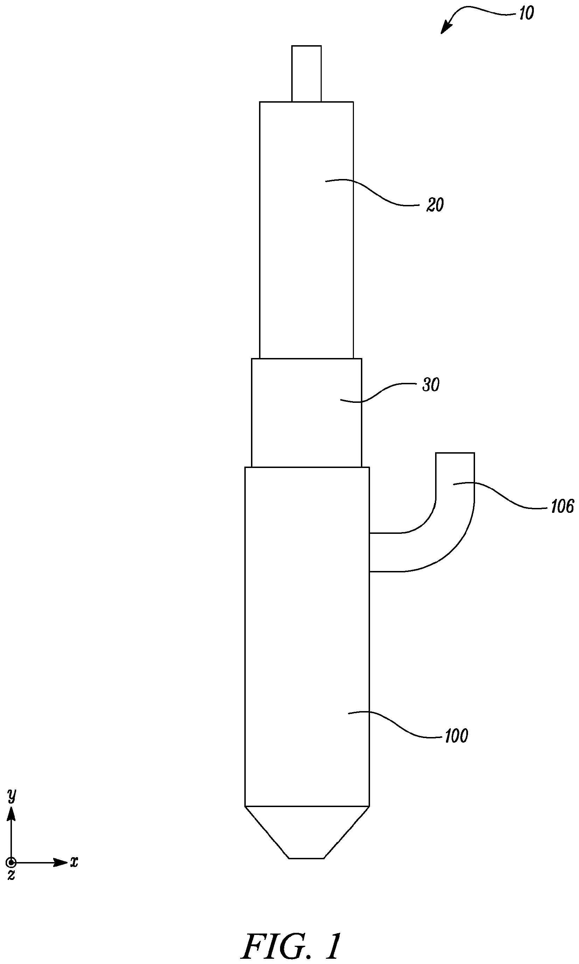

Fig. 1 illustrates a schematic side view of a nozzle assembly 10, according to an example of the present invention.

The nozzle assembly 10 defines mutually orthogonal x, y, and z-axes. The y-axis is disposed along a length of the nozzle assembly 10. The x- and y-axes are disposed along a width and a breadth of the of the nozzle assembly 10, respectively. In some cases, the nozzle assembly 10 may be substantially cylindrical in shape. In such cases, the x- and z-axes may be along a diameter of the nozzle assembly 10.

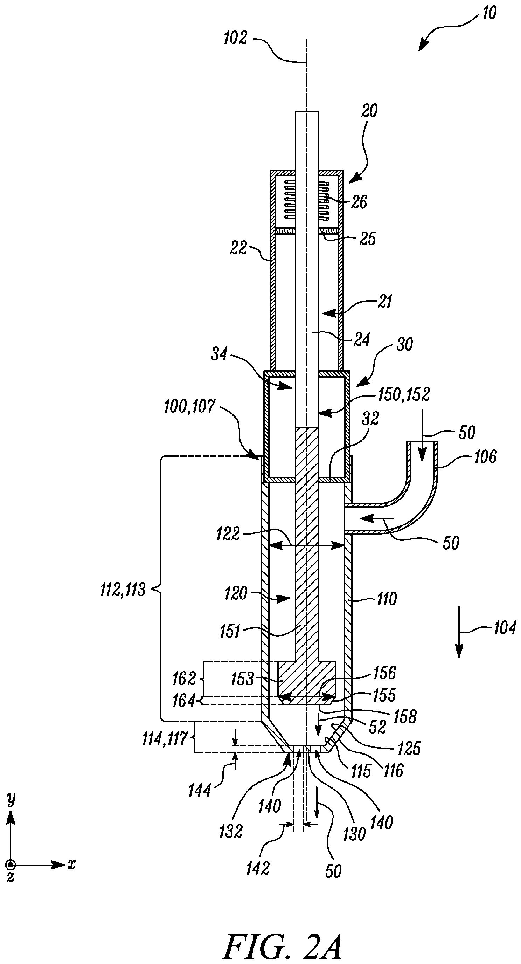

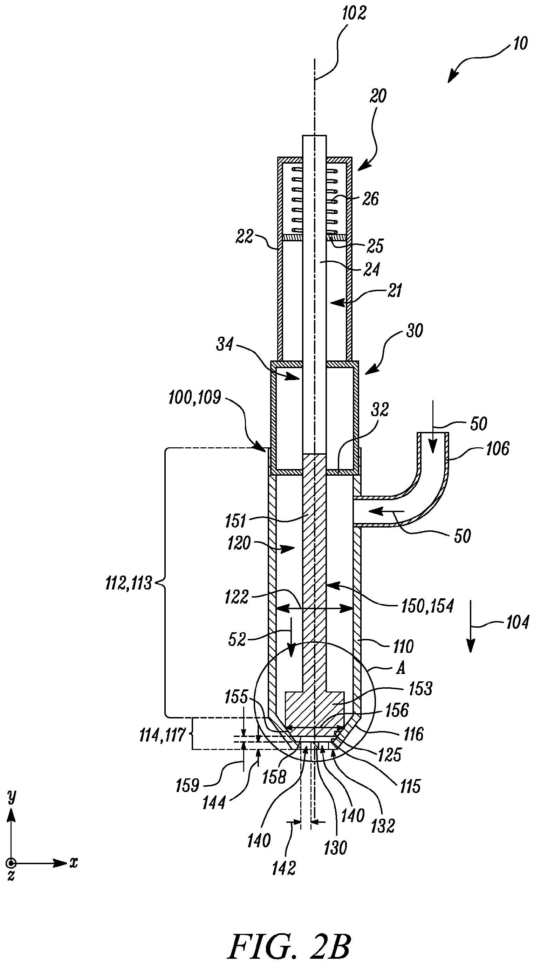

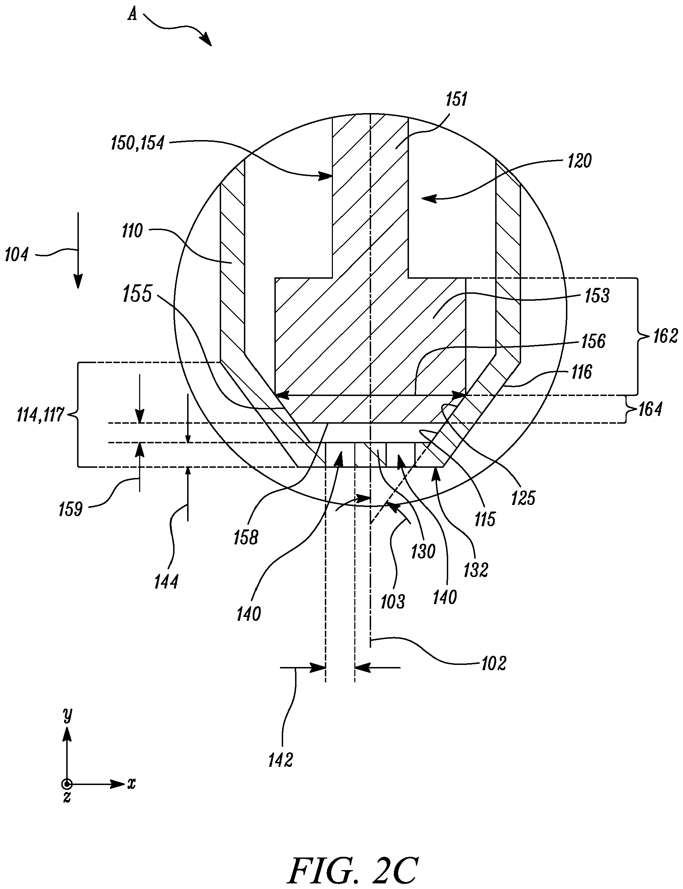

The nozzle assembly 10 may comprise an actuating cylinder 20, an optional connecting body 30, and a dosing nozzle 100 for dispensing a liquid composition 50 (shown in Fig. 2A). The actuating cylinder 20, the optional connecting body 30, and the dosing nozzle 100 may be disposed along the length of the nozzle assembly 10. The actuating cylinder 20 may comprise any suitable commercially available actuating cylinder, such as an air cylinder, a hydraulic cylinder, an electromechanical actuator, and so forth. The optional connecting body 30 may comprise an element of any configuration that is suitable for connecting the actuating cylinder 20 to the dosing nozzle 100. Figs. 2A and 2B illustrate schematic cross-sectional views of the nozzle assembly 10 taken along an x-y plane. Figs. 2A and 2B illustrate the dosing nozzle 100 in an open state 107 and a closed state 109, respectively. Fig. 2C illustrates a detailed view of a portion A of the dosing nozzle 100 in the closed state 109.

### Dosing Nozzle

Referring to Figs. 1 and 2A-2C, the dosing nozzle 100 comprises a nozzle body 110 and a flow restrictor 150. In the illustrated example of Figs. 1 and 2A-2C, the dosing nozzle 100 further comprises a nozzle inlet 106. Specifically, the nozzle body 110 of the dosing nozzle 100 comprises the nozzle inlet 106. However, the dosing nozzle 100 may not comprise the nozzle inlet 106. In such cases, any other component of the nozzle assembly 10 may comprise the nozzle inlet 106. The dosing nozzle 100 may comprise more than one nozzle inlet. The nozzle inlet 106 may be of any suitable shape to conduct the liquid composition 50 and is not limited to the illustrated example.

The nozzle body 110 defines a main channel 120 extending at least partially along a longitudinal axis 102 of the nozzle body 110. The longitudinal axis 102 of the nozzle body 110 may be disposed along the y-axis. The nozzle inlet 106 may be in fluid communication with a source (not shown) and may be configured to receive the liquid composition 50 from the source. Further, the nozzle inlet 106 may be disposed in fluid communication with the main channel 120 and configured to discharge the liquid composition 50 within the main channel 120. Therefore, the main channel 120 is configured to receive the liquid composition 50 therein. The liquid composition 50 may be received within main channel 120 at a pressure greater than 0 bar and less than or equal to 10 bar, for example, specifically reciting all 0.1 bar increments within the specified ranges and all ranges formed therein or thereby. An average width 122 of the main channel 120 may be between 5 millimeters (mm) and 20 mm, and preferably between 7 mm and 12 mm, for example, specifically reciting all 0.1 mm increments within the specified ranges and all ranges formed therein or thereby. The average width 122 of the main channel 120 may be 8 mm, 9 mm, 10 mm, or 11 mm.

The nozzle body 110 further comprises a tip wall 130 disposed at a tip 132 of the nozzle body 110. The nozzle body 110 may comprise a main nozzle portion 112 and a tip portion 114. The main nozzle portion 112 may define at least partially the main channel 120 and the tip portion 114 may be connected to the main nozzle portion 112. The tip portion 114 comprises the tip wall 130. A ratio between a length of the main nozzle portion 112 and a length of the tip portion 114 may be between 10:1 and 1:1, for example 10:1, 8:1, 6:1, 4:1, 2:1, or 1:1. In the illustrated example of Figs. 2A to 2C, a ratio between the length of the main nozzle portion 112 and the length of the tip portion 114 may be 5:1.

The tip wall 130 may have a substantially planar configuration in the x-z plane. The tip wall 130 may have a substantially circular shape in the x-z plane. The tip wall 130 may have a polygonal shape in the x-z plane.

The main nozzle portion 112 of the nozzle body 110 may define a major channel portion 113 of the main channel 120. The major channel portion 113 may have a substantially uniform width. The tip portion 114 of the nozzle body 110 may define a tapering channel portion 117 tapering inwardly from the major channel portion 113 along the longitudinal axis 102 in a direction 104 towards the tip wall 130. The direction 104 may be along the y-axis.

The tip portion 114 has an inner surface 115 and an outer surface 116 opposite to the inner surface 115. The outer surface 116 and the inner surface 115 may be separated by a distance that may correspond to a thickness of the tip portion 114. The thickness of the tip portion 114 of the nozzle body 110 may vary along the longitudinal axis 102 of the nozzle body 110. In the illustrated example of Figs. 2A to 2C, the outer surface 116 and the inner surface 115 have a substantially similar cross-sectional shape in the x-y plane. Therefore, the thickness of the tip portion 114 may not substantially vary along the longitudinal axis 102.

Further, in the illustrated example of Figs. 2A to 2C, the main nozzle portion 112 and the tip portion 114 are integrally formed. However, in some other examples, the main nozzle portion 112 and the tip portion 114 may be separate components detachably connected to each other. The nozzle body 110 may be made of any suitable material, for example, but not limited to, stainless steel, titanium, metal alloys, aluminum, plastic, polymers, hardened resins, or polytetrafluoroethylene (e.g., Teflon ^{®}) material.

The nozzle body 110 may comprise a channel sealing surface 125 at least partially defining the main channel 120 and extending from the tip wall 130. The tip portion 114 may comprise the channel sealing surface 125. Specifically, the inner surface 115 of the tip portion 114 may at least partially comprise the channel sealing surface 125. In the illustrated example of Figs. 2A to 2C, the tapering channel portion 117 of the tip portion 114 comprises the channel sealing surface 125. Therefore, the channel sealing surface 125 is inclined obliquely to the longitudinal axis 102. The channel sealing surface 125 may be inclined obliquely to the longitudinal axis 102 by an angle 103 (shown in Fig. 2C) greater than 10 degree and less than 80 degrees. The angle 103 may be greater than 25 degrees and less than 65 degrees. In the illustrated example of Figs. 2A to 2C, the angle 103 is 45 degrees.

The tip portion 114 comprising the tip wall 130 may comprise a plurality of orifices 140. Specifically, the tip wall 130 defines the plurality of orifices 140 extending therethrough and disposed in fluid communication with the main channel 120. The plurality of orifices 140 may form an outlet of the dosing nozzle 100. Specifically, the plurality of orifices 140 is configured to receive the liquid composition 50 from the main channel 120 and dispense the liquid composition 50 from the dosing nozzle 100. The dosing nozzle 100 may dispense the liquid composition 50 into a compartment (e.g., a unit dose article) external to the dosing nozzle 100.

A length 144 of each orifice 140 along the longitudinal axis 102 may be between 0.5 mm and 5 mm, for example, specifically reciting all 0.1 mm increments within the specified ranges and all ranges formed therein or thereby. The length 144 of each orifice 140 along the longitudinal axis 102 may be 1 mm, 2 mm, 3mm or 4 mm. The length 144 of each orifice 140 along the longitudinal axis 102 may correspond to an average thickness of the tip wall 130. Each orifice 140 may have a substantially circular shape. A shape of one or more orifices 140 from the plurality of orifices 140 may be selected from semicircular, quadrant, circular sector, oval, elliptical, superelliptical, square, rectangular, triangular, polygonal, or a combination thereof. The plurality of orifices 140 may have any suitable shape to dispense the liquid composition 50 from the dosing nozzle 100.

An average width 142 of each orifice 140 may be between 2 mm and 10 mm, and preferably between 3 mm to 6 mm, for example, specifically reciting all 0.1 mm increments within the specified ranges and all ranges formed therein or thereby. The average width 142 of each orifice 140 may be 4 mm, 6 mm, or 8 mm. In cases the shape of the plurality of orifices 140 is circular, the average width 142 may be a diameter of the plurality of orifices 140. A total surface area of each orifice 140 may be between 5 mm² and 200 mm², for example, specifically reciting all 0.1 mm² increments within the specified ranges and all ranges formed therein or thereby. The total surface area of each orifice 140 may correspond to a total surface area of a portion of the tip wall 130 that bounds or defines each orifice 140 along the length 144.

An average width 142 of each orifice 140 may be greater than the length 144 of the orifice 140. In other words, each orifice 140 may have a low aspect ratio. The average width 142 of each orifice 140 may be greater than the length 144 of each orifice 140 by a factor of between 2 and 20.

Since, the average width 142 of each of the plurality of orifices 140 may be greater than that of nozzle openings of conventional nozzles, the dosing nozzle 100 may dispense a greater volume of the liquid composition 50 during a filling process. This may increase a volumetric flow rate of the liquid composition 50 and may thereby increase a speed and efficiency of the filling process as it may take significantly lesser time to fill the compartments.

Further, a lesser number of orifices 140 may be required to dispense a required volume of the liquid composition 50. Therefore, a number of the plurality of orifices 140 may be less than or equal to six. Specifically, the number of the orifices 140 may be between 2 and 6. This may further reduce a manufacturing complexity of the nozzle body 110. Specifically, this may reduce a manufacturing complexity of the tip portion 114 comprising the tip wall 130 that defines the plurality of orifices 140.

The flow restrictor 150 may comprise a stem 151 extending at least partially along the longitudinal axis 102 and a head 153 extending from the stem 151. The flow restrictor 150 may be made of any suitable material, for example, but not limited to, stainless steel, titanium, metal alloys, aluminum, plastic, polymers, hardened resins, or polytetrafluoroethylene (e.g., Teflon ^{®}) material. The stem 151 and the head 153 may be integrally formed or may be separate components configured to be detachably connected to each other by any suitable attachment mechanisms.

The head 153 may comprise a wide head portion 162 and a tapering head portion 164. The wide head portion 162 may extend from the stem 151 along the longitudinal axis 102 in the direction 104. The wide head portion 162 may have a substantially rectangular cross-section along the x-y plane (i.e., a longitudinal plane). Therefore, the wide head portion 162 may have a substantially uniform width along the longitudinal axis 102. However, the wide head portion 162 may have any suitable cross-sectional shape along the x-y plane. The wide head portion 162 may have a substantially circular cross-sectional shape along the x-z plane (i.e., a transverse plane). The wide head portion 162 may have a substantially polygonal cross-sectional shape along the x-z plane. The tapering head portion 164 may extend from the wide head portion 162 and may taper inwardly along the longitudinal axis 102 in the direction 104 towards the tip wall 130. The head 153 may comprise only the tapering head portion 164 extending from the stem 151 along the longitudinal axis 102 in the direction 104. The tapering head portion 164 may have a substantially circular cross-sectional shape along the x-z plane. The tapering head portion 164 may have a substantially polygonal cross-sectional shape along the x-z plane. A shape of the tapering head portion 164 may correspond at least partially to a shape of the tapering channel portion 117.

The flow restrictor 150 is slidably received within the main channel 120 and movable between a closed position 154 (shown in Fig. 2B) and an open position 152 (shown in Fig. 2A). The flow restrictor 150 is in the open position 152 in the open state 107 of the dosing nozzle 100. Similarly, the flow restrictor 150 is in the closed position 154 in the closed state 109 of the dosing nozzle 100.

In the open position 152, the flow restrictor 150 allows a flow 52 of the liquid composition 50 from the main channel 120 to the plurality of orifices 140. However, in the closed position 154, the flow restrictor 150 sealingly engages with the nozzle body 110 upstream of the plurality of orifices 140 to prevent the flow 52 of the liquid composition 50 from the main channel 120 to the plurality of orifices 140. Specifically, in the closed position 154, the tapering head portion 164 sealingly engages the tapering channel portion 117 upstream of the plurality of orifices 140 to prevent the flow 52 of the liquid composition 50 from the main channel 120 to the plurality of orifices 140. The terms "upstream" and "downstream" are defined with respect to the flow 52 of the liquid composition 50. The sealing engagement of the flow restrictor 150 with the nozzle body 110 upstream of the plurality of orifices 140 in the closed position 154 implies that there is no direct contact between the flow restrictor 150 and the plurality of orifices 140 in the closed position 154. In the closed position 154, a proximal end 158 of the flow restrictor 150 may be axially spaced apart from the tip wall 130 by a distance 159 of between 0.2 mm and 5 mm, for example, specifically reciting all 0.1 mm increments within the specified ranges and all ranges formed therein or thereby. The distance 159 may be 0.5 mm, 1 mm, 2 mm, 3 mm, or 4 mm. The proximal end 158 may correspond to an end surface of the head 153 of the flow restrictor 150. The distance 159 is measured between the proximal end 158 of the flow restrictor 150 and the inner surface 115 of the tip wall 130 along the longitudinal axis 102. Therefore, in the closed position 154, the proximal end 158 of the flow restrictor 150 is disposed upstream of the inner surface 115 of the tip wall 130 by the distance 159 along the longitudinal axis 102. In other words, in the closed position 154, the flow restrictor 150 does not directly contact the plurality of orifices 140. In the closed position 154, the flow restrictor 150 may sealingly engage with the nozzle body 110 downstream of the nozzle inlet 106.

The flow restrictor 150 may comprise a restrictor sealing surface 155. Specifically, the head 153 of the flow restrictor 150 comprises the restrictor sealing surface 155. More specifically, the tapering head portion 164 of the head 153 comprises the restrictor sealing surface 155. A maximum width 156 of the restrictor sealing surface 155 may be between 5 mm and 20 mm, for example, specifically reciting all 0.1 mm increments within the specified ranges and all ranges formed therein or thereby. The maximum width 156 of the restrictor sealing surface 155 may correspond to a maximum width of the tapering head portion 164 at an interface between the wide head portion 162 and the tapering head portion 164. Therefore, the maximum width 156 of the restrictor sealing surface 155 may correspond to the uniform width of the wide head portion 162. The maximum width 156 of the restrictor sealing surface 155 may be 6 mm, 8 mm, 10 mm, 12 mm, 14 mm, 16 mm, or 18 mm. In the illustrated example of Figs. 2A to 2C, the maximum width 156 of the restrictor sealing surface 155 is less than the average width 122 of the main channel 120. In other words, the average width 122 of the main channel 120 is greater than the maximum width 146 of the restrictor sealing surface 155. Therefore, in both the open and closed positions 152, 154, the wide head portion 162 does not engage a wall of the nozzle body 110. Only the restrictor sealing surface 155 engages the channel sealing surface 125 in the closed position 154. This may minimize rubbing or abrasion between the flow restrictor 150 and the nozzle body 110, and consequently increase a service life of the dosing nozzle 100. Further, in the open position 152, the liquid composition 50 can freely flow around the head 153 of the flow restrictor 150 without any restriction. Moreover, in the open position 152, the head 153 can be disposed proximal to the tip portion 114 and need not be moved upstream of the nozzle inlet 106, thereby reducing a stroke length of the flow restrictor 150.

In the illustrated example of Figs. 2A to 2C, each of the channel sealing surface 125 and the restrictor sealing surface 155 tapers inwardly along the longitudinal axis 102 in the direction 104 towards the tip wall 130. The channel sealing surface 125 and the restrictor sealing surface 155 may have a same angle of inclination (e.g., the angle 103) or may have different angles of inclination with respect to the longitudinal axis 102 in the direction 104 towards the tip wall 130, preferably a same angle of inclination. Each of the channel sealing surface 125 and the restrictor sealing surface 155 may have a frustoconical shape or a frustopyramidal shape, preferably the frustoconical shape.

As shown in Figs. 2B and 2C, in the closed position 154, the restrictor sealing surface 155 of the flow restrictor 150 sealingly engages with the channel sealing surface 125 of the nozzle body 110.

As discussed above, the average width 142 of the plurality of orifices 140 may be greater than that of the nozzle openings of the conventional nozzles, which may increase the volumetric flow rate of the liquid composition 50 and may thereby increase the speed and efficiency of the filling process. Typically, when a size of the nozzle openings of a conventional nozzle is increased, dispensing the liquid composition 50 may provide various filling challenges. For example, the liquid composition 50 may result in a filament or a string that forms and hangs down from the nozzle openings at an end of a filling cycle following the discharge of a relevant volume of the liquid composition 50. This filament or string may take some time to break up. The time to break up is typically longer than desired and may impose a limitation on a speed at which consecutive filling cycles can take place, as a successive filling cycle initiating before the filament or string breaks up may cause the liquid composition 50 to fall in undesignated areas. In another example, the liquid composition 50 may splash out of the compartments. This may also cause liquid composition 50 to fall in the undesignated areas. For example, the undesignated area may be seal areas or areas between the compartments. Therefore, stringing and/or splashing of the liquid composition 50 may lead to a poor sealing and an increased risk of leakage.

However, it was surprisingly found that the dosing nozzle 100 according to the present invention overcame these issues. Specifically, the engagement of the flow restrictor 150 with the nozzle body 110 upstream of the plurality of orifices 140 to prevent the flow 52 of the liquid composition 50 from the main channel 120 to the plurality of orifices 140 may cleanly shut off the flow 52 of the liquid composition 50 to prevent or substantially reduce the stringing and dripping of the liquid composition 50 in the undesignated areas of the compartments. Therefore, the dosing nozzle 100 may provide minimal or negligible stringing and dripping of the liquid composition 50 while increasing the speed and efficiency of the filling process of the liquid composition 50 into the compartments.

Some conventional methods to reduce the stringing, dripping and/or splashing of the liquid composition 50 may comprise using a large number of nozzle openings. However, if the nozzle openings are spaced too close to one another, the liquid composition 50 may join together to form one stream, which in turn, can result in the same aforementioned stringing and dripping of the liquid composition 50. Further, if the nozzle openings are spaced far apart, fewer openings may be able to fit on a nozzle surface resulting in a reduced volumetric flow rate and a slower filling speed. In some cases, the nozzle surface may be increased. However, a size of a stopper which closes all nozzle openings to prevent a flow of the liquid composition 50 may also be increased. Therefore, such stoppers of the conventional nozzles may be substantially greater in size and weight as compared to the flow restrictor 150 of the dosing nozzle 100 of the present invention. Further, in some cases, the stoppers may not be able to close all nozzle openings to prevent the flow of the liquid composition 50 effectively (for example, the stoppers may not be able to close the nozzle openings near a perimeter of the nozzle surface). This may give rise to leakages from the conventional nozzles having a large number of nozzle openings.

Therefore, the number of the plurality of orifices 140 being less than or equal to six may also ensure a reduced size and weight of the flow restrictor 150.

Further, as the flow restrictor 150 sealingly engages with the nozzle body 110 upstream of the plurality of orifices 140 to prevent the flow 52 of the liquid composition 50 from the main channel 120 to the plurality of orifices 140, and as the size and weight of the flow restrictor 150 is substantially lesser than the conventional stoppers, a lesser axial force may be required to move the flow restrictor 150 between the open position 152 and the closed position 154. This may further increase a speed of movement of the flow restrictor 150 between the open and closed positions 152, 154 due to reduced inertia.

Further, as each of the channel sealing surface 125 and the restrictor sealing surface 155 tapers inwardly along the longitudinal axis 102 in the direction 104 towards the tip wall 130, the engagement between the flow restrictor 150 and the channel sealing surface 125 may provide a sufficient seal to shut off the flow 52 of the liquid composition 50. Therefore, the flow restrictor 150 may not require a separate compliant sealing member or part (e.g., an elastomeric component made of rubber). Specifically, the flow restrictor 150 needs to only sealingly interface with the channel sealing surface 125 and not each of the plurality of orifices 140. Consequently, the flow restrictor 150 may not require a compliant sealing member to reliably and separately seal each of the plurality of orifices 140. This may reduce a component count of the dosing nozzle 100, and hence may reduce a manufacturing complexity of the dosing nozzle 100. Furthermore, the compliant sealing member may be susceptible to wear over time and therefore may need to be replaced. This may reduce a running time of the dosing nozzle 100 and therefore decrease the efficiency of the filling systems. Moreover, as any compliant sealing member may not be required, and the size and weight of the flow restrictor 150 is substantially less than the conventional stoppers, the flow restrictor 150 and/or the nozzle body 110 may comprise a metal or a metal alloy. Such a metal or a metal alloy may be less susceptible to wear than a compliant sealing member and may therefore have a longer service life.

The actuating cylinder 20 may comprise an actuating cylinder housing 22 having an interior hollow space 21 therein. The actuating cylinder 20 may further comprise an actuating cylinder rod 24, a piston 25, and a spring 26. The actuating cylinder 20 may comprise one or more air inlets (not shown) to actuate the piston 25.

The flow restrictor 150 may be connected to the actuating cylinder rod 24. Specifically, the stem 151 of the flow restrictor 150 may be connected to the actuating cylinder rod 24. In some cases, a flexible diaphragm 32 may encircle at least a portion of the actuating cylinder rod 24 or the stem 151. In the illustrated example of Figs. 2A-2C, the flexible diaphragm 32 encircles at least a portion of the stem 151.

During operation of the nozzle assembly 10, the actuating cylinder 20 may move the actuating cylinder rod 24 along the longitudinal axis 102. Specifically, the actuating cylinder rod 24 may reciprocate along the y-axis. Consequently, the flow restrictor 150 connected to the actuating cylinder rod 24 may also move or reciprocate along the longitudinal axis 102. The movement of the flow restrictor 150 along the longitudinal axis 102 may be between the open position 152 and the closed position 154. When the compartment is in a position to be filled, a machine program may transmit a signal to the actuating cylinder 20 to move the actuating cylinder rod 24, such that the flow restrictor 150 is in the open position 152 and allows the liquid composition 50 to flow through the plurality of orifices 140 into the compartment. The actuating cylinder 20 may move the actuating cylinder rod 24 after a time period, such that the flow restrictor 150 is in the closed position 154 and prevents the flow 52 of the liquid composition 50 from the main channel 120 to the plurality of orifices 140.

The optional connecting body 30 may comprise an interior hollow space 34 therein. At least a portion of the actuating cylinder rod 24 or at least a portion of the stem 151 of the flow restrictor 150 may be disposed in the interior hollow space 34 in the open position 152 and/or the closed position 154. At least a portion of the stem 151 may be disposed in the interior hollow space 34 in the open position 152. At least a portion of the actuating cylinder rod 24 may be disposed in the interior hollow space 34 in the closed position 154. At least a portion of the actuating cylinder rod 24 and at least a portion of the stem 151 of the flow restrictor 150 may be disposed in the interior hollow space 34 in both the open position 152 and the closed position 154.

The spring 26 may hold or bias the flow restrictor 150 against the nozzle body 110 in the closed position 154. Specifically, the spring 26 may hold the restrictor sealing surface 155 against the channel sealing surface 125 in the closed position 154. This may keep the liquid composition 50 from dispensing from the plurality of orifices 140 in an event when the actuating cylinder 20 is turned off, for instance, for an emergency, maintenance, component failure, or any other such event.

Therefore, the present invention provides a lightweight dosing nozzle 100 that may be capable filling the compartments with minimal or negligible stringing and dripping of the liquid composition 50 while increasing the speed and efficiency of the filling process of the liquid composition 50.

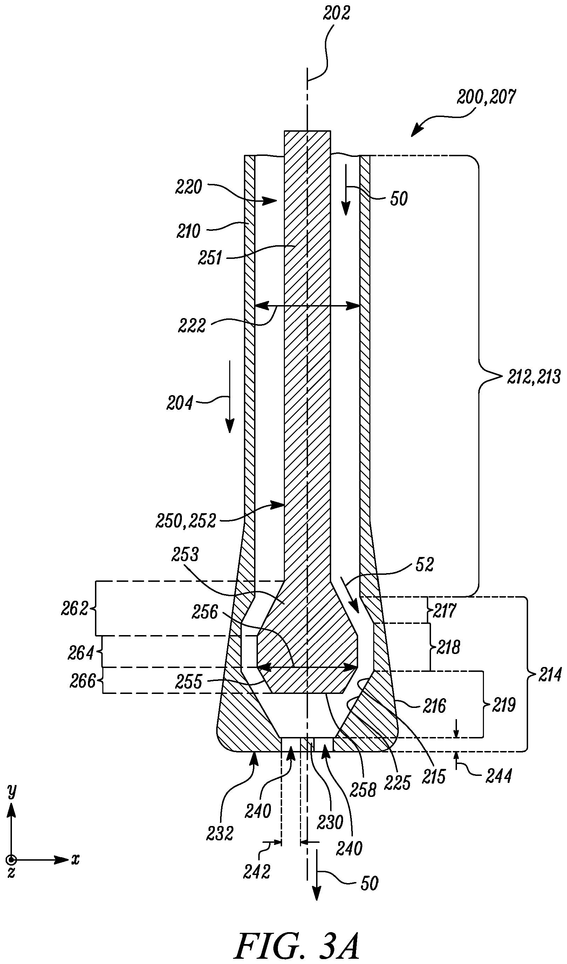

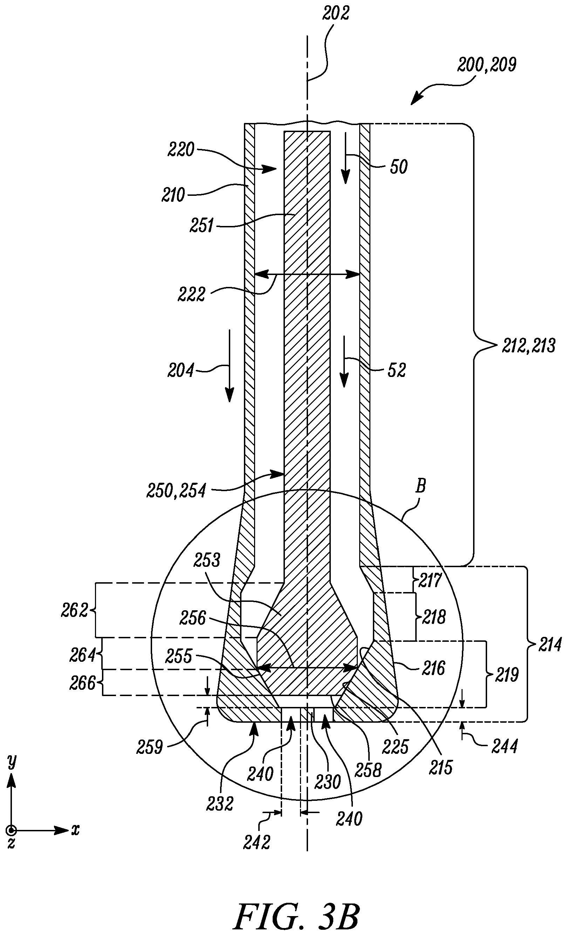

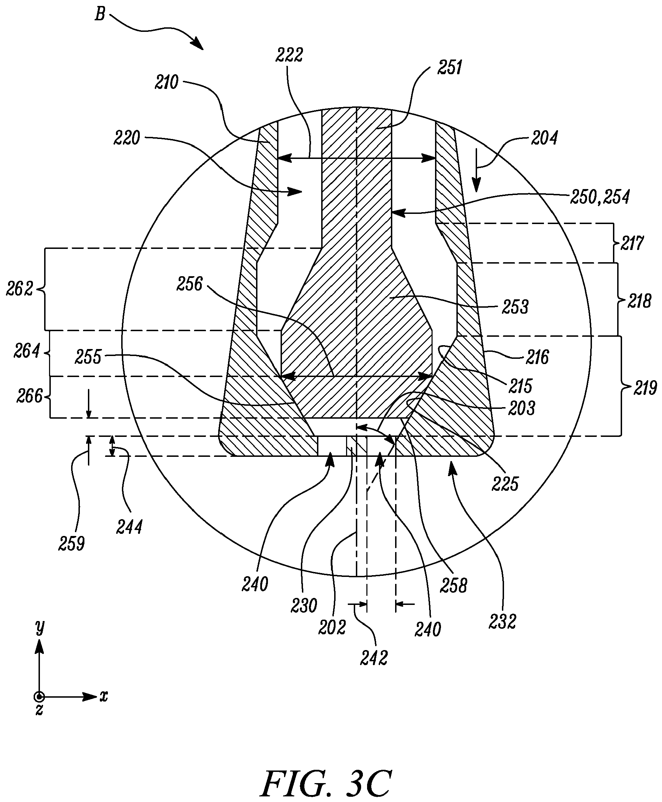

Figs. 3A and 3B illustrate schematic cross-sectional views of a dosing nozzle 200 taken along the x-y plane, according to another example of the present invention. Figs. 3A and 3B illustrate the dosing nozzle 200 in an open state 207 and a closed state 209, respectively. Fig. 3C illustrates a detailed view of a portion B of the dosing nozzle 200 in the closed state 209.

The nozzle assembly 10 (shown in Fig. 1) may comprise dosing nozzle 200 instead of dosing nozzle 100 (shown in Fig. 1). Therefore, the dosing nozzle 200 may also be used for dispensing the liquid composition 50 (also shown in Fig. 1).

The dosing nozzle 200 comprises a nozzle body 210 and a flow restrictor 250. The nozzle body 210 defines a main channel 220 extending at least partially along a longitudinal axis 202 of the nozzle body 210. The longitudinal axis 202 of the nozzle body 210 may be disposed along the y-axis.

A nozzle inlet of the dosing nozzle 200 is not shown in Figs. 3A-3C for the purpose of clarity. The dosing nozzle 200 may include a nozzle inlet substantially similar to the nozzle inlet 106 shown in Fig. 1. Any other component of the nozzle assembly 10 may comprise the nozzle inlet substantially similar to the nozzle inlet 106 shown in Fig. 1. The dosing nozzle 200 may comprise one or more nozzle inlets. Therefore, the main channel 220 is configured to receive the liquid composition 50 therein. The liquid composition 50 is received within main channel 220 at a pressure greater than 0 bar and less than or equal to 10 bar, for example, specifically reciting all 0.1 bar increments within the specified ranges and all ranges formed therein or thereby. An average width 222 of the main channel 220 may be substantially similar to the average width 122 of the main channel 120 shown in Figs. 2A-2C.

The nozzle body 210 further comprises a tip wall 230 disposed at a tip 232 of the nozzle body 210. The nozzle body 210 may comprise a main nozzle portion 212 and a tip portion 214. The main nozzle portion 212 may define at least partially the main channel 220 and the tip portion 214 may be connected to the main nozzle portion 212. The tip portion 214 comprises the tip wall 230. A ratio between a length of the main nozzle portion 212 and a length of the tip portion 214 may be between 10:1 and 1:1, for example 10:1, 8:1, 6:1, 4:1, 2:1, or 1:1. In the illustrated example of Figs. 3A to 3C, a ratio between the length of the main nozzle portion 212 and the length of the tip portion 214 may be 4:1. The tip wall 230 may be substantially similar to the tip wall 130 (shown in Figs. 2A-2C).

The main nozzle portion 212 may define a major channel portion 213 of the main channel 220. The major channel portion 213 may have a substantially uniform width.

The tip portion 214 of the nozzle body 210 may define a first tapering channel portion 217 tapering outwardly from the major channel portion 213 along the longitudinal axis 202 in a direction 204 towards the tip wall 230. The direction 204 may be along the y-axis. Optionally, the tip portion 214 of the nozzle body 210 may define a wide portion 218 extending from the first tapering channel portion 217 along the longitudinal axis 102 in the direction 104 towards the tip wall 130. The tip portion 214 of the nozzle body 210 may define a second tapering channel portion 219 tapering inwardly from the wide portion 218 along the longitudinal axis 202 in the direction 204 towards the tip wall 230. The wide portion 218 may be omitted, and the second tapering channel portion 219 may directly taper inwardly from the first tapering channel portion 217 along the longitudinal axis 202 in the direction 204 towards the tip wall 230.

The tip portion 214 has an inner surface 215 and an outer surface 216 opposite to the inner surface 215. The outer surface 216 and the inner surface 215 may be separated by a distance that may correspond to a thickness of the tip portion 214. The thickness of the tip portion 214 of the nozzle body 210 may vary along the longitudinal axis 202 of the nozzle body 210. In the illustrated example of Figs. 3A to 3C, the outer surface 216 and the inner surface 215 have different cross-sectional shapes in the x-y plane. Therefore, the thickness of the tip portion 214 may vary along the longitudinal axis 202.

In the illustrated example of Figs. 3A to 3C, the main nozzle portion 212 and the tip portion 214 are integrally formed. However, the main nozzle portion 212 and the tip portion 214 may be separate components and may be detachably connected to each other. The nozzle body 210 may be made of any suitable material, for example, but not limited to, materials described with reference to the nozzle body 110 (shown in Figs. 2A-2C).

The nozzle body 210 may comprise a channel sealing surface 225 at least partially defining the main channel 220 and extending from the tip wall 230. The tip portion 214 may comprise the channel sealing surface 225. Specifically, the inner surface 215 of the tip portion 214 may at least partially comprise the channel sealing surface 225. In the illustrated example of Figs. 3A to 3C, the second tapering channel portion 219 of the tip portion 214 comprises the channel sealing surface 225. Therefore, the channel sealing surface 225 is inclined obliquely to the longitudinal axis 202. The channel sealing surface 225 may be substantially similar to the channel sealing surface 125 shown in Figs. 2A-2C. Therefore, an angle 203 (shown in Fig. 3C) may be similar to the angle 103 (shown in Fig. 2C).

The tip portion 214 comprising the tip wall 230 may comprise a plurality of orifices 240. Specifically, the tip wall 230 defines the plurality of orifices 240 extending therethrough and disposed in fluid communication with the main channel 220. The plurality of orifices 240 may form an outlet of the dosing nozzle 200. Specifically, the plurality of orifices 240 is configured to receive the liquid composition 50 from the main channel 220 and dispense the liquid composition 50 from the dosing nozzle 200. The dosing nozzle 200 may dispense the liquid composition 50 into the compartment external to the dosing nozzle 200.

The plurality of orifices 240 may be substantially similar to the plurality of orifices 140 of the dosing nozzle 100 (shown in Figs. 2A to 2C). Therefore, a length 244 of each orifice 240, an average width 242 of each orifice 240, a shape of one or more orifices 240, a total surface area of each orifice 240, and a number of the plurality of orifices 240, may be substantially similar to that of the plurality of orifices 140 of the dosing nozzle 100.

The flow restrictor 250 may comprise a stem 251 extending at least partially along the longitudinal axis 202 and a head 253 extending from the stem 251. The flow restrictor 250 may be made of any suitable material, for example, but not limited to, materials described with reference to the flow restrictor 150 (shown in Figs. 2A-2C). The stem 251 and the head 253 may be integrally formed or may be separate components configured to be detachably connected to each other by any suitable attachment mechanisms.

The head 253 may comprise a first tapering head portion 262, a wide head portion 264, and a second tapering head portion 266. The first tapering head portion 262 may extend from the stem 251 and taper outwardly along the longitudinal axis 202 in the direction 204 towards the tip wall 230. The first tapering head portion 262 may have any suitable cross-sectional shape along the x-y plane (i.e., a longitudinal plane). The first tapering head portion 262 may have a substantially circular cross-sectional shape along the x-z plane (i.e., a transverse plane). The first tapering head portion 262 may have a substantially polygonal cross-sectional shape along the x-z plane. The wide head portion 264 may extend from the first tapering head portion 262 and may have a substantially rectangular cross-sectional shape along the x-y plane. Therefore, the wide head portion 264 may have a substantially uniform width along the longitudinal axis 202. The wide head portion 264 may have a substantially circular cross-sectional shape along the x-z plane. The wide head portion 264 may have a substantially polygonal cross-sectional shape along the x-z plane. The second tapering head portion 266 may extend from the wide head portion 264 and may taper inwardly along the longitudinal axis 202 in the direction 204 towards the tip wall 230. The head 253 may comprise only the second tapering head portion 266 extending from the stem 251 along the longitudinal axis 202 in the direction 204. The second tapering head portion 266 may have a substantially circular cross-sectional shape along the x-z plane. The second tapering head portion 266 may have a substantially polygonal cross-sectional shape along the x-z plane. A shape of the second tapering head portion 266 may correspond at least partially to a shape of the second tapering channel portion 219.

The flow restrictor 250 is slidably received within the main channel 220 and movable between a closed position 254 (shown in Fig. 3B) and an open position 252 (shown in Fig. 3A). The flow restrictor 250 is in the open position 252 in the open state 207 of the dosing nozzle 200. Similarly, the flow restrictor 250 is in the closed position 254 in the closed state 209 of the dosing nozzle 200.

In the open position 252, the flow restrictor 250 allows the flow 52 (also shown in Fig. 2A) of the liquid composition 50 from the main channel 220 to the plurality of orifices 240. However, in the closed position 254, the flow restrictor 250 sealingly engages with the nozzle body 210 upstream of the plurality of orifices 240 to prevent the flow 52 of the liquid composition 50 from the main channel 220 to the plurality of orifices 240. Specifically, in the closed position 254, the second tapering head portion 266 sealingly engages the second tapering channel portion 219 upstream of the plurality of orifices 240 to prevent the flow 52 of the liquid composition 50 from the main channel 220 to the plurality of orifices 240. In the closed position 254, a proximal end 258 of the flow restrictor 250 may be axially spaced apart from the tip wall 230 by a distance 259. The distance 259 may be substantially similar to the distance 159 shown in Figs. 2B-2C.

The flow restrictor 250 may comprise a restrictor sealing surface 255. Specifically, the head 253 of the flow restrictor 250 comprises the restrictor sealing surface 255. More specifically, the second tapering head portion 266 of the head 253 comprises the restrictor sealing surface 255. The restrictor sealing surface 255 may be substantially similar to the restrictor sealing surface 155. Therefore, a maximum width 256 of the restrictor sealing surface 255 may be substantially similar to the maximum width 156 of the restrictor sealing surface 155. In the illustrated example of Figs. 3A to 3C, the maximum width 256 of the restrictor sealing surface 255 is less than the average width 222 of the main channel 220. In other words, the average width 222 of the main channel 220 is greater than the maximum width 256 of the restrictor sealing surface 255.

In the illustrated example of Figs. 3A to 3C, the maximum width 256 of the restrictor sealing surface 255 may correspond to a maximum width of the head 253 of the flow restrictor 250. Therefore, the maximum width of the head 253 is less than the average width 222 of the main channel 220. Further, the maximum width of the head 253 is less than a width of the wide portion 218 of the tip portion 214. Therefore, in both the open and closed positions 252, 254, the wide head portion 264 and the first tapering head portion 262 do not engage a wall of the nozzle body 210. Only the restrictor sealing surface 255 engages the channel sealing surface 225 in the closed position 254.

The flow restrictor 250 may be connected to the actuating cylinder rod 24 (shown in Fig. 2A) and may operate in a substantially similar manner as the flow restrictor 150.

Therefore, the dosing nozzle 200 may be lightweight and may be capable of filling the compartments with minimal or negligible stringing and dripping of the liquid composition 50 while increasing the speed and efficiency of the filling process of the liquid composition 50.

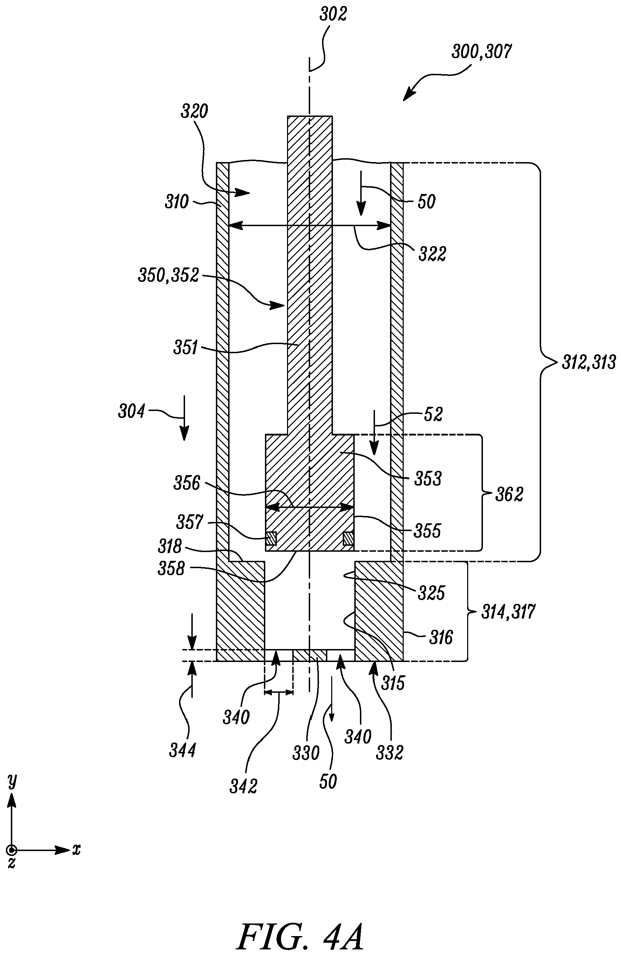

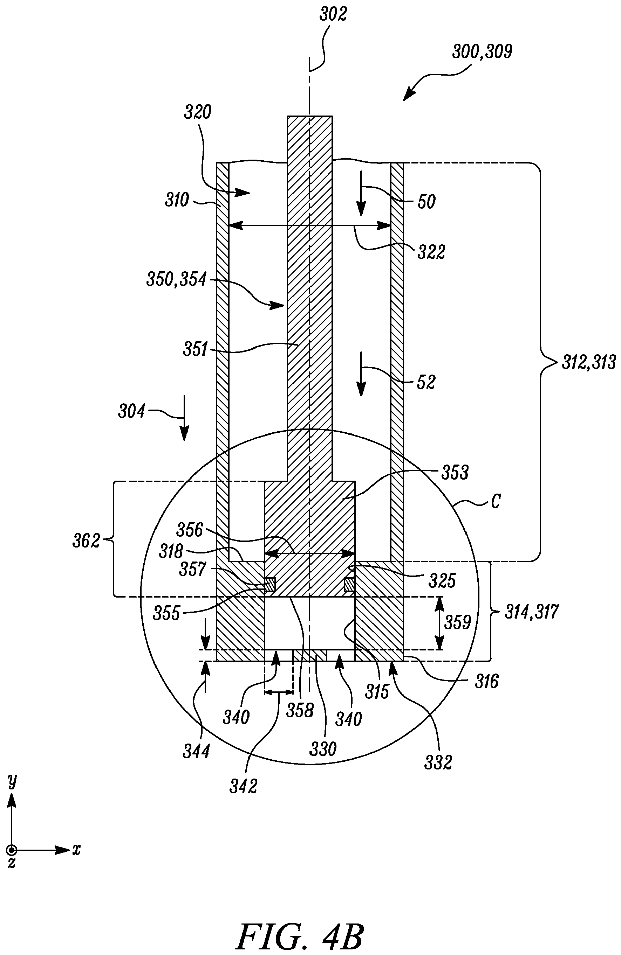

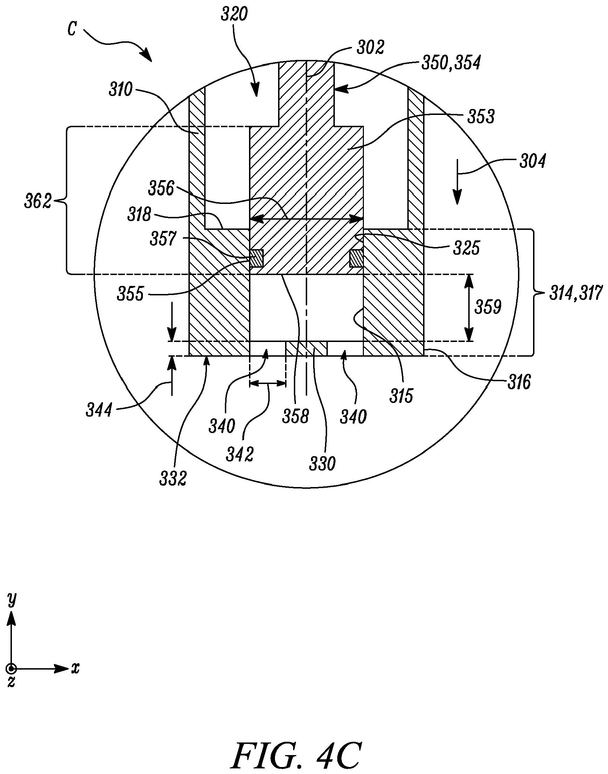

Figs. 4A and 4B illustrate cross-sectional views of a dosing nozzle 300 taken along the x-y plane, according to another example of the present invention. Figs. 4A and 4B illustrate the dosing nozzle 300 in an open state 307 and a closed state 309, respectively. Fig. 4C illustrates a detailed view of a portion C of the dosing nozzle 300 in the closed state 309.

The nozzle assembly 10 (shown in Fig. 1) may comprise dosing nozzle 300 instead of dosing nozzle 100 (shown in Fig. 1). Therefore, the dosing nozzle 300 may also be used for dispensing the liquid composition 50 (also shown in Fig. 1).

The dosing nozzle 300 comprises a nozzle body 310 and a flow restrictor 350. The nozzle body 310 defines a main channel 320 extending at least partially along a longitudinal axis 302 of the nozzle body 310. The longitudinal axis 302 of the nozzle body 310 may be disposed along the y-axis.

A nozzle inlet of the dosing nozzle 300 is not shown in Figs. 4A-4C for the purpose of clarity. The dosing nozzle 300 may include a nozzle inlet substantially similar to the nozzle inlet 106 shown in Fig. 1. Any other component of the nozzle assembly 10 may comprise the nozzle inlet substantially similar to the nozzle inlet 106 shown in Fig. 1. The dosing nozzle 300 may comprise one or more nozzle inlets. Therefore, the main channel 320 is configured to receive the liquid composition 50 therein. The liquid composition 50 is received within main channel 320 at a pressure greater than 0 bar and less than or equal to 10 bar, for example, specifically reciting all 0.1 bar increments within the specified ranges and all ranges formed therein or thereby. An average width 322 of the main channel 320 may be substantially similar to the average width 122 of the main channel 120 shown in Figs. 2A-2C.

The nozzle body 310 further comprises a tip wall 330 disposed at a tip 332 of the nozzle body 310. The nozzle body 310 may comprise a main nozzle portion 312 and a tip portion 314. The main nozzle portion 312 may define at least partially the main channel 320 and the tip portion 314 may be connected to the main nozzle portion 312. The tip portion 314 comprises the tip wall 330. A ratio between a length of the main nozzle portion 312 and a length of the tip portion 314 may be between 10:1 and 1:1, for example 10:1, 8:1, 6:1, 4:1, 2:1, or 1:1. In the illustrated example of Figs. 4A to 4C, a ratio between the length of the main nozzle portion 312 and the length of the tip portion 314 may be 4:1. The tip wall 330 may be substantially similar to the tip wall 130 (shown in Figs. 2A-2C). The main nozzle portion 312 of the nozzle body 310 may define a major channel portion 313 of the main channel 320. The major channel portion 313 may have a substantially uniform width.

The tip portion 314 of the nozzle body 310 may define a narrow channel portion 317 of the main channel 320. The narrow channel portion 317 may also have a substantially uniform width. The substantially uniform width of the narrow channel portion 317 of the tip portion 314 may be less than the substantially uniform width of the major channel portion 313 of the main channel 320.

The nozzle body 310 includes a step 318 at an interface between the major channel portion 313 and the narrow channel portion 317. The step 318 may extend along the x-axis substantially perpendicular to the longitudinal axis 302, such that the width of the narrow channel portion 317 is less than the width of the major channel portion 313.

The tip portion 314 has an inner surface 315 and an outer surface 316 opposite to the inner surface 315. The outer surface 316 and the inner surface 315 may be separated by a distance that correspond to a thickness of the tip portion 314. The thickness of the tip portion 314 of the nozzle body 310 may vary along the longitudinal axis 302 of the nozzle body 310. In the illustrated example of Figs. 4A to 4C, the outer surface 316 and the inner surface 315 have substantially similar cross-sectional shapes. Therefore, the thickness of the tip portion 314 may not substantially vary along the longitudinal axis 302. Each of the outer and inner surfaces 316, 315 extend substantially parallel to the longitudinal axis 302.

In the illustrated example of Figs. 4A to 4C, the main nozzle portion 312 and the tip portion 314 are integrally formed. However, the main nozzle portion 312 and the tip portion 314 may be separate components and may be detachably connected to each other. The nozzle body 310 may be made of any suitable material, for example, but not limited to, materials described with reference to the nozzle body 110 (shown in Figs. 2A-2C).

The nozzle body 310 may comprise a channel sealing surface 325 at least partially defining the main channel 320 and extending from the tip wall 330. The tip portion 314 may comprise the channel sealing surface 325. Specifically, the inner surface 315 of the tip portion 314 may at least partially comprise the channel sealing surface 325. In the illustrated example of Figs. 4A to 4C, the narrow channel portion 317 of the tip portion 314 comprises the channel sealing surface 325. Therefore, the channel sealing surface 325 is parallel to the longitudinal axis 302. In other words, an angle (not shown) between the channel sealing surface 325 and the longitudinal axis 302 may be 0 degree.

The tip portion 314 comprising the tip wall 330 may comprise a plurality of orifices 340. Specifically, the tip wall 330 defines the plurality of orifices 340 extending therethrough and disposed in fluid communication with the main channel 320. The plurality of orifices 340 may form an outlet of the dosing nozzle 300. Specifically, the plurality of orifices 340 is configured to receive the liquid composition 50 from the main channel 320 and dispense the liquid composition 50 from the dosing nozzle 300. The dosing nozzle 300 may dispense the liquid composition 50 into the compartment external to the dosing nozzle 300.

The plurality of orifices 340 may be substantially similar to the plurality of orifices 140 of the dosing nozzle 100 (shown in Figs. 2A to 2C). Therefore, a length 344 of each orifice 340, an average width 342 of each orifice 340, a shape of one or more orifices 340, a total surface area of each orifice 340, and a number of the plurality of orifices 340, may be substantially similar to that of the plurality of orifices 140 of the dosing nozzle 100.

The flow restrictor 350 may comprise a stem 351 extending at least partially along the longitudinal axis 302 and a head 353 extending from the stem 351. The flow restrictor 350 may further comprise a sealing member 357. Specifically, the head 353 may comprise the sealing member 357.

The flow restrictor 350 may be made of any suitable material, for example, but not limited to, materials described with reference to the flow restrictor 150 (shown in Figs. 2A-2C). The stem 351 and the head 353 may be integrally formed or may be separate components configured to be detachably connected to each other by any suitable attachment mechanisms.

The sealing member 357 may be made of any suitable material, for example, but not limited to, rubber, silicone, or any other elastomeric material. The sealing member 357 may be an O-ring, a C-ring, or any other type of annular sealing member.

The head 353 may comprise a wide head portion 362. The wide head portion 362 may extend from the stem 351 along the longitudinal axis 302 in a direction 304 towards the tip wall 330. The direction 304 may be along the y-axis. The wide head portion 362 comprises the sealing member 357. The wide head portion 362 may have a substantially rectangular cross-sectional shape along the x-y plane (i.e., a longitudinal plane). Therefore, the wide head portion 362 may have a substantially uniform width along the longitudinal axis 302. The wide head portion 362 may have a substantially circular cross-sectional shape along the x-z plane (i.e., a transverse plane). The wide head portion 362 may have a substantially polygonal cross-sectional shape along the x-z plane. A shape of the wide head portion 362 may correspond at least partially to a shape of the narrow channel portion 317.

The flow restrictor 350 is slidably received within the main channel 320 and movable between a closed position 354 (shown in Fig. 4B) and an open position 352 (shown in Fig. 4A). The flow restrictor 350 is in the open position 352 in the open state 307 of the dosing nozzle 300. Similarly, the flow restrictor 350 is in the closed position 354 in the closed state 309 of the dosing nozzle 300.

In the open position 352, the flow restrictor 350 allows the flow 52 (also shown in Fig. 2A) of the liquid composition 50 from the main channel 320 to the plurality of orifices 340. However, in the closed position 354, the flow restrictor 350 sealingly engages with the nozzle body 310 upstream of the plurality of orifices 340 to prevent the flow 52 of the liquid composition 50 from the main channel 320 to the plurality of orifices 340. Specifically, in the closed position 354, the wide head portion 362 sealingly engages the narrow channel portion 317 upstream of the plurality of orifices 340 to prevent the flow 52 of the liquid composition 50 from the main channel 320 to the plurality of orifices 340. In the closed position 354, the sealing member 357 may sealingly engage the narrow channel portion 317 upstream of the plurality of orifices 340 to prevent the flow 52 of the liquid composition 50 from the main channel 320 to the plurality of orifices 340. In the closed position 354, a proximal end 358 of the flow restrictor 350 may be axially spaced apart from the tip wall 330 by a distance 359. The distance 359 may be substantially similar to the distance 159 shown in Figs. 2B-2C.

The flow restrictor 350 may comprise a restrictor sealing surface 355. Specifically, the head 353 of the flow restrictor 350 comprises the restrictor sealing surface 355. More specifically, the wide head portion 362 of the head 353 comprises the restrictor sealing surface 355. A maximum width 356 of the restrictor sealing surface 355 may be substantially similar to the maximum width 156 of the restrictor sealing surface 155. In the illustrated example of Figs. 4A to 4C, the maximum width 356 of the restrictor sealing surface 355 is less than the average width 322 of the main channel 320. In other words, the average width 322 of the main channel 320 is greater than the maximum width 356 of the restrictor sealing surface 355.

In the illustrated example of Figs. 4A to 4C, the maximum width 356 of the restrictor sealing surface 355 may correspond to a maximum width of the head 353 of the flow restrictor 350. The maximum width of the head 353 is less than the average width 322 of the main channel 320. Therefore, in the open position 352, the wide head portion 362 do not engage a wall of the nozzle body 310. The wide head portion 362 may only engage the restrictor sealing surface 255 in the closed position 254.

In the illustrated example of Figs. 4A to 4C, each of the channel sealing surface 325 and the restrictor sealing surface 355 extends parallel to the longitudinal axis 302. Each of the channel sealing surface 325 and the restrictor sealing surface 355 may have a cylindrical shape, or a cuboidal shape.

As shown in Figs. 4B and 4C, in the closed position 354, the restrictor sealing surface 355 of the flow restrictor 350 sealingly engages with the channel sealing surface 325 of the nozzle body 310.

The flow restrictor 350 may be connected to the actuating cylinder rod 24 (shown in Fig. 2A) and may operate in a substantially similar manner as the flow restrictor 150.

Therefore, the dosing nozzle 300 may be lightweight and may be capable of filling the compartments with minimal or negligible stringing and dripping of the liquid composition 50 while increasing the speed and efficiency of the filling process of the liquid composition 50.

### Nozzle Body

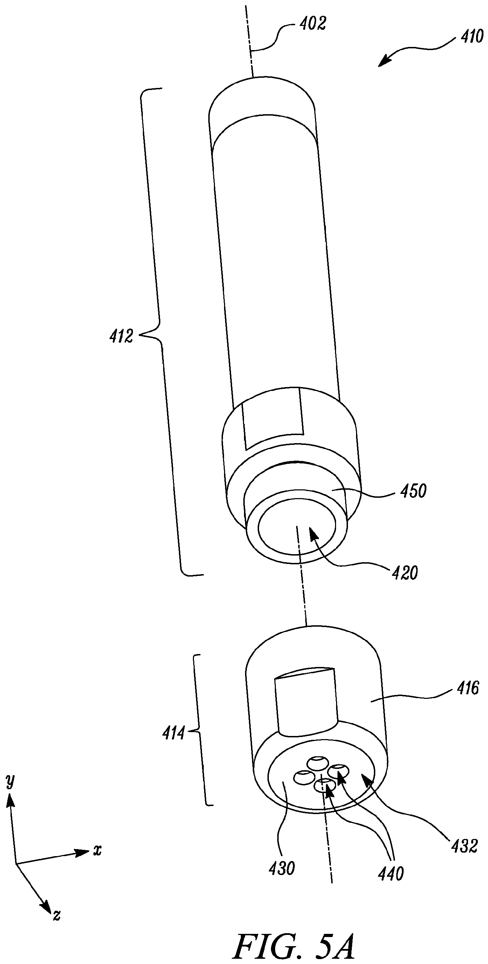

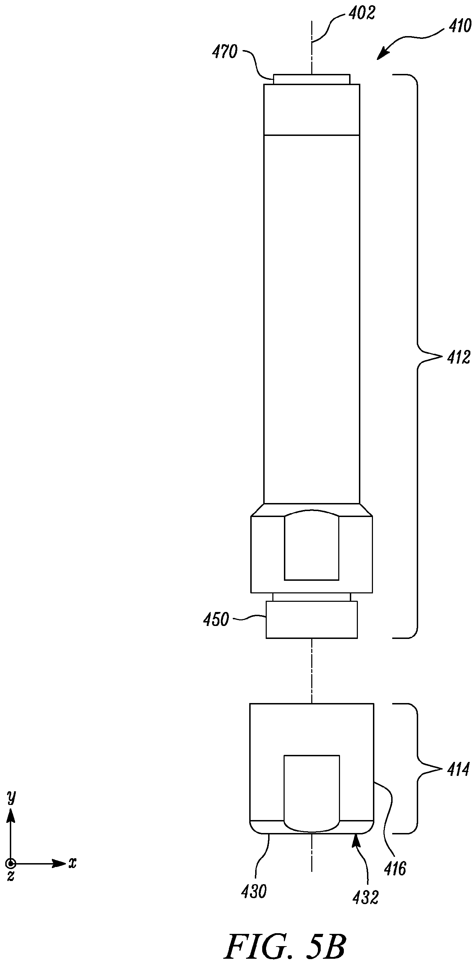

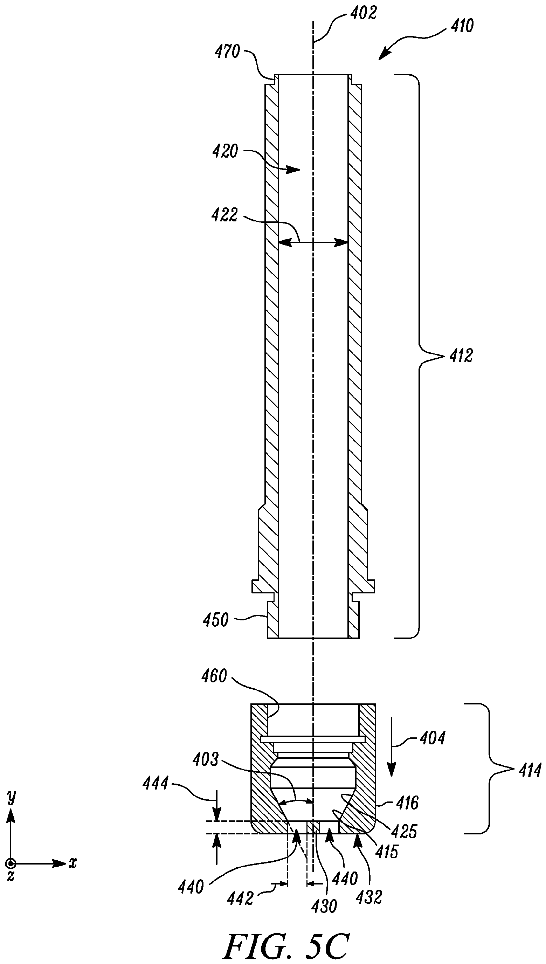

Fig. 5A illustrates an exploded perspective front view of a nozzle body 410 according to another example of the present invention. Fig. 5B illustrates an exploded side view of the nozzle body 410. Fig. 5C illustrates an exploded cross-sectional side view of the nozzle body 410 taken along the x-y plane.

Referring to Figs. 5A to 5C, the nozzle body 410 defines a main channel 420 extending at least partially along a longitudinal axis 402 of the nozzle body 410. The longitudinal axis 402 of the nozzle body 210 may be disposed along the y-axis. An average width 422 of the main channel 420 may be between 5 mm and 20 mm, and preferably between 7 mm and 12 mm, for example, specifically reciting all 0.1 mm increments within the specified ranges and all ranges formed therein or thereby. The average width 422 of the main channel 420 may be 8 mm, 9 mm, 10 mm, or 11 mm.

The nozzle body 410 further comprises a tip wall 430 disposed at a tip 432 of the nozzle body 410. The nozzle body 410 comprises a main nozzle portion 412 defining at least partially the main channel 420, and a tip portion 414. The tip portion 414 comprises the tip wall 430. In some examples, a ratio between a length of the main nozzle portion 412 and a length of the tip portion 414 may be between 10:1 and 1:1, for example 10:1, 8:1, 6:1, 4:1, 2:1, or 1:1. In the illustrated example of Figs. 5A to 5C, a ratio between the length of the main nozzle portion 412 and the length of the tip portion 414 may be 5:1.

The tip wall 430 may have a substantially planar configuration in the x-z plane. The tip wall 430 may have a substantially circular shape in the x-z plane. In some other examples, the tip wall 430 may have a polygonal shape in the x-z plane.

In the illustrated example of Figs. 5A to 5C, the main nozzle portion 412 and the tip portion 414 are separate components. In other words, the main nozzle portion 412 and the tip portion 414 are not integrally formed. The tip portion 414 is configured to be detachably connected to the main nozzle portion 412. The main nozzle portion 412 may comprise an outer connecting surface 450 and the tip portion may comprise an inner connecting surface 460. The tip portion 414 may be connected to the nozzle body 410 by any suitable attachment mechanisms, such as fasteners, adhesives, snap-fit mechanisms, bayonet attachment mechanism, clamps, and so forth.

The outer connecting surface 450 and the inner connecting surface 460 may engage to detachably connect the main nozzle portion 412 and the tip portion 414. The outer connecting surface 450 may comprise external threads (not shown). Similarly, the inner connecting surface 460 may comprise internal threads (not shown). The internal threads may be threadingly engaged with the external threads to detachably connect the main nozzle portion 412 with the tip portion 414.

The main nozzle portion 412 may comprise an outer connecting surface 470 for attaching the nozzle body 410 to the optional connecting body 30 or the actuating cylinder 20 shown in Fig. 1.

Therefore, the tip portion 414 may be readily replaced. The tip portion 414 may be replaced for a different flow requirement (for example, a tip portion with a different number or shape of orifices may be used as per flow requirements). The tip portion 414 may further be replaced in case of damage, thereby mitigating a need to replace a dosing nozzle. This may further reduce a cost of repair.

The main nozzle portion 412 and the tip portion 414 may be made of any suitable material, for example, but not limited to, materials described with reference to the nozzle body 110 (shown in Figs. 2A-2C).

The tip portion 414 has an inner surface 415 and an outer surface 416 opposite to the inner surface 415. The outer surface 416 and the inner surface 415 may be separated by a distance that may correspond to a thickness of the tip portion 414. In the illustrated example of Figs. 5A to 5C, the outer surface 416 and the inner surface 415 have different cross-sectional shapes in the x-y plane. Therefore, the thickness of the tip portion 414 may vary along the longitudinal axis 402.

The nozzle body 410 may comprise a channel sealing surface 425 at least partially defining the main channel 420 and extending from the tip wall 430. Specifically, the tip portion 414 comprises the channel sealing surface 425.

In the illustrated example of Fig. 5C, the channel sealing surface 425 is inclined obliquely to the longitudinal axis 402. The channel sealing surface 425 may be substantially similar to the channel sealing surface 125 shown in Figs. 2A-2C. Therefore, an angle 403 (shown in Fig. 4C) may be substantially similar to the angle 103. In other examples, the channel sealing surface 425 may be substantially similar to the channel sealing surface 325 shown in Figs. 3A-3C. Therefore, the channel sealing surface 425 may be parallel to the longitudinal axis 402.

In the illustrated example of Fig. 5C, the channel sealing surface 125 tapers inwardly along the longitudinal axis 402 in a direction 404 towards the tip wall 430. The channel sealing surface 425 may have a frustoconical shape or a frustopyramidal shape, preferably the frustoconical shape. A shape of a restrictor sealing surface of a flow restrictor (not shown) configured to be slidably received within the main channel 420 may correspond to the shape of the channel sealing surface 425. Specifically, the shape of the restrictor sealing surface of a head of the flow restrictor may correspond to the shape of the channel sealing surface 425.

The tip portion 414 comprising the tip wall 430 may comprise a plurality of orifices 440. The tip wall 130 defines the plurality of orifices 440 extending therethrough. The plurality of orifices 440 is disposed in fluid communication with the main channel 420 when the tip portion 414 is detachably connected to the main nozzle portion 412. The plurality of orifices 440 may be substantially similar to the plurality of orifices 140 of the dosing nozzle 100 (shown in Figs. 2A to 2C). Therefore, a length 444 of each orifice 440, an average width 442 of each orifice 440, a shape of one or more orifices 440, a total surface area of each orifice 440, and a number of the plurality of orifices 440, may be substantially similar to that of the plurality of orifices 140 of the dosing nozzle 100.

### Tip Portion

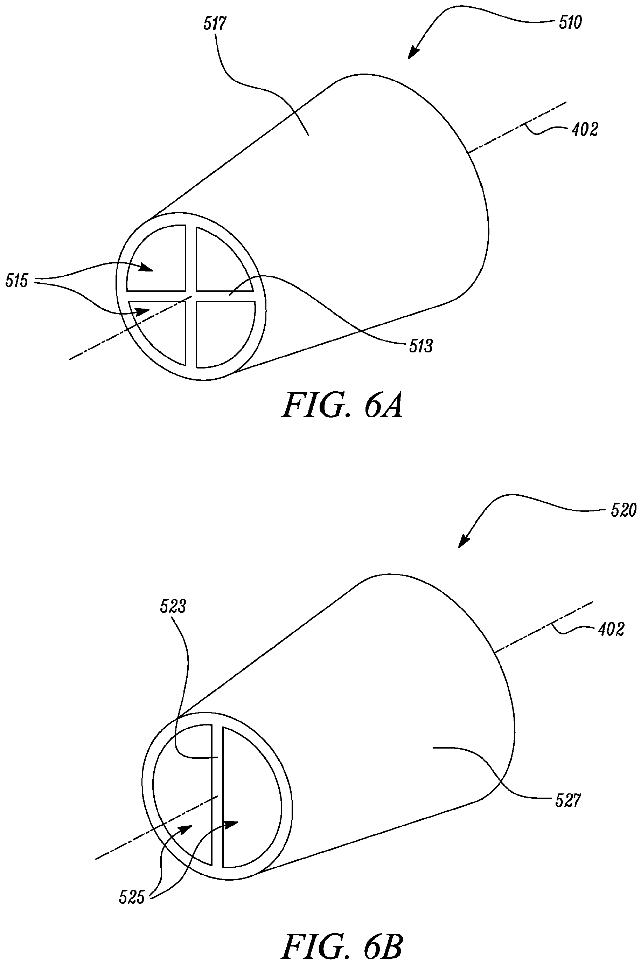

Figs. 6A-6D illustrate front perspective views of various tip portions according to different examples of the present invention.

Fig. 6A illustrates a tip portion 510. The tip portion 510 may be configured to be detachably connected to the main nozzle portion 412 (shown in Figs. 5A to 5C). The tip portion 510 comprises a tip wall 513. The tip wall 513 defines a plurality of orifices 515 extending therethrough. In the illustrated example of Fig. 6A, a number of the plurality of orifices 515 is four. The plurality of orifices 515 comprises a plurality of angular circular sectors separated from each other by respective separating segments extending radially relative to the longitudinal axis 402 of the nozzle body 410 (shown in Figs. 5A to 5C). The shape of each orifice 515 corresponds to a 90-degree circular sector.

Fig. 6B illustrates a tip portion 520 substantially similar to the tip portion 510. The tip portion 520 comprises a tip wall 523. The tip wall 523 defines a plurality of orifices 525 extending therethrough. However, a number of the plurality of orifices 525 in the tip portion 520 is two. Further, each of the plurality of orifices 525 has a substantially semi-circular shape. In other words, the shape of each orifice 525 corresponds to a 180-degree circular sector.

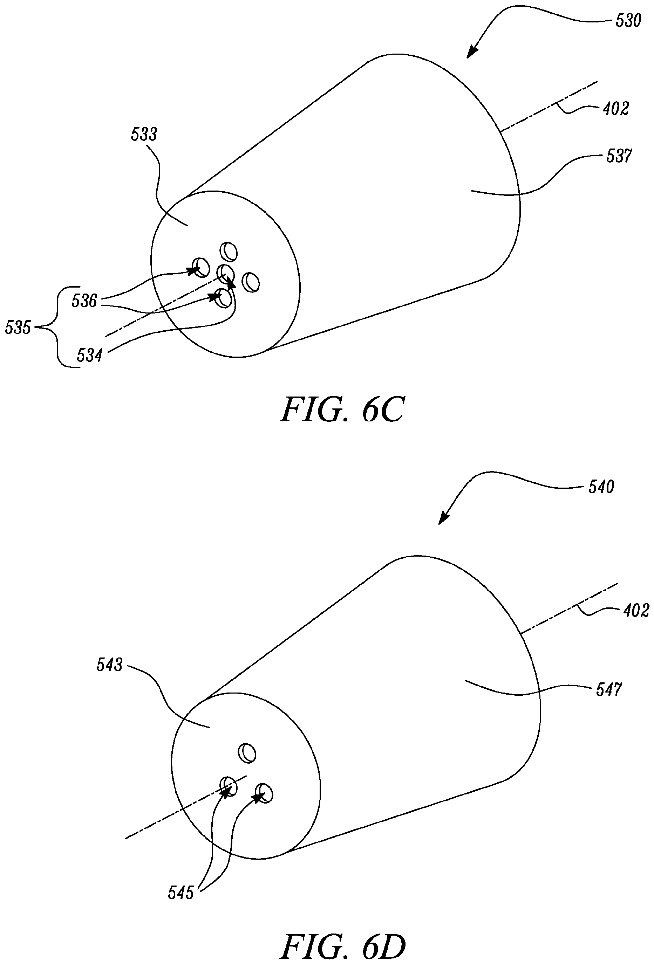

Fig. 6C illustrates a tip portion 530. The tip portion 530 may be configured to be detachably connected to the main nozzle portion 412 (shown in Figs. 5A to 5C). The tip portion 530 comprises a tip wall 533. The tip wall 533 defines a plurality of orifices 535 extending therethrough. In the illustrated example of Fig. 6C, a number of the plurality of orifices 535 is five. The plurality of orifices 535 comprises a central orifice 534 and a plurality of peripheral orifices 536 surrounding the central orifice 534. The plurality of orifices 535 may be arranged concentrically about the longitudinal axis 402 of the nozzle body 410. Further, each of the plurality of orifices 535 has substantially a circular shape.

Fig. 6D illustrates a tip portion 540 substantially similar to the tip portion 530. The tip portion 540 comprises a tip wall 543. The tip wall 543 defines a plurality of orifices 545 extending therethrough. However, a number of the plurality of orifices 535 in the tip portion 540 is three.

Referring to Figs. 6A-6D, the tip portions 510, 520, 530, 540 have frustoconical outer surfaces 517, 527, 537, 547, respectively. The frustoconical outer surfaces 517, 527, 537, 547 may taper towards the respective tip walls 513, 523, 533, 543. The tip portions 510, 520, 530, 540 may have respective inner surfaces (not shown) opposite to the respective frustoconical outer surfaces 517, 527, 537, 547. The inner surfaces may comprise channel sealing surfaces (for example, the channel sealing surface 425 shown in Fig. 5C) tapering inwardly along the longitudinal axis 402 in the direction 404 towards the tip walls 513, 523, 533, 543, respectively. However, the inner surfaces may comprise channel sealing surfaces (for example, the channel sealing surface 325) parallel to the longitudinal axis 402.

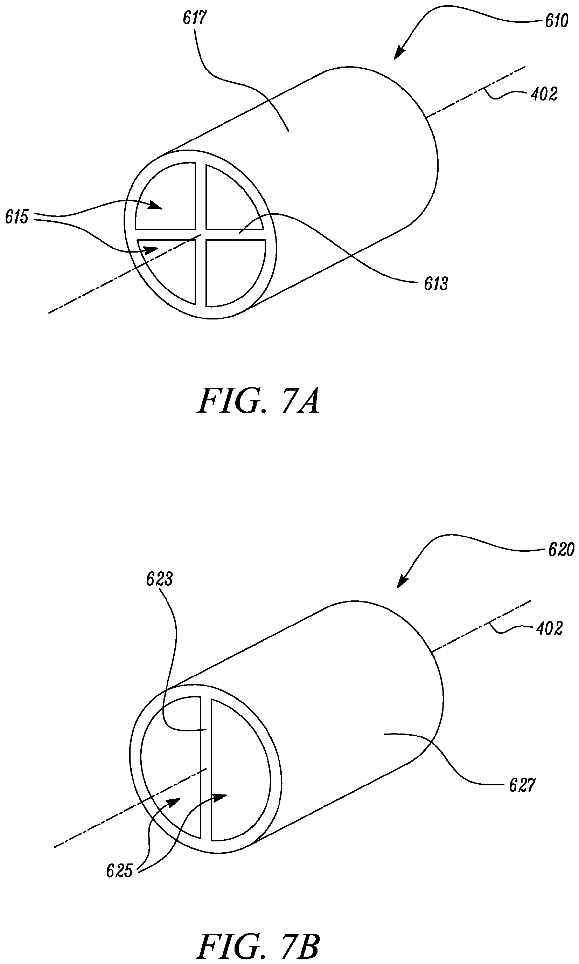

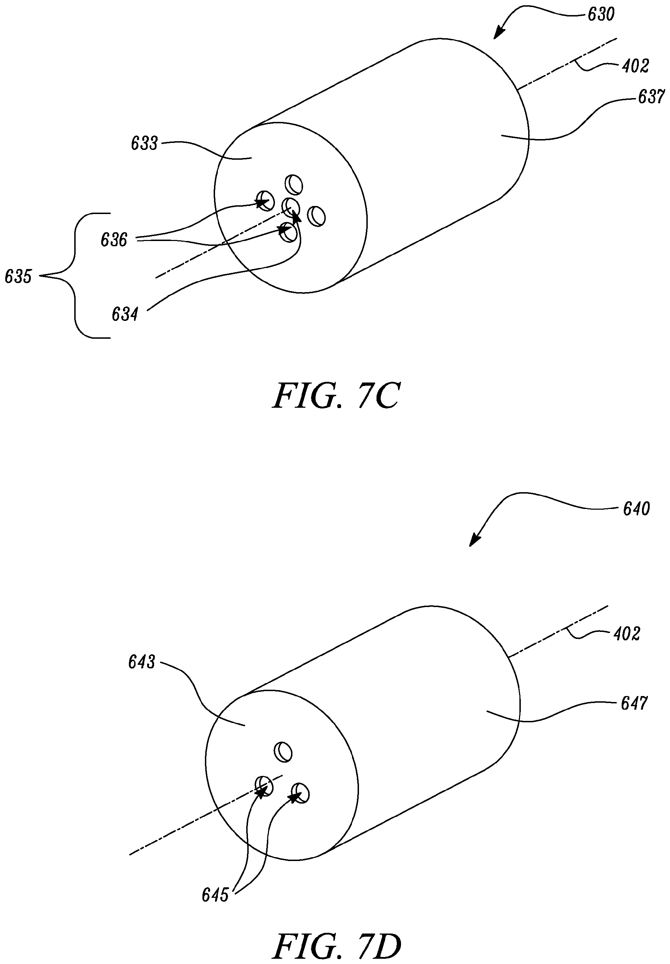

Figs. 7A-7D illustrate front perspective views of various tip portions according to different examples of the present invention.

Referring to Figs. 7A-7D, the tip portions 610, 620, 630, 640 are substantially similar to the tip portions 510, 520, 530, 540, respectively. However, the tip portions 610, 620, 630, 640 have cylindrical outer surfaces 617, 627, 637, 647, respectively. The tip portions 610, 620, 630, 640 may have respective inner surfaces (not shown) opposite to the respective cylindrical outer surfaces 617, 627, 637, 647. The inner surfaces may comprise channel sealing surfaces (for example, the channel sealing surface 425 shown in Fig. 5C) tapering inwardly along the longitudinal axis 402 in the direction 404 towards the tip walls 613, 623, 633, 643, respectively. However, the inner surfaces may comprise channel sealing surfaces (for example, the channel sealing surface 325) parallel to the longitudinal axis 402.

The tip portions 610, 620, 630, 640 may have any other suitable shape of the corresponding outer surfaces. For example, the tip portions 610, 620, 630, 640 may have frustopyramidal outer surfaces, cuboidal outer surfaces, and so forth.

### Flow Restrictor

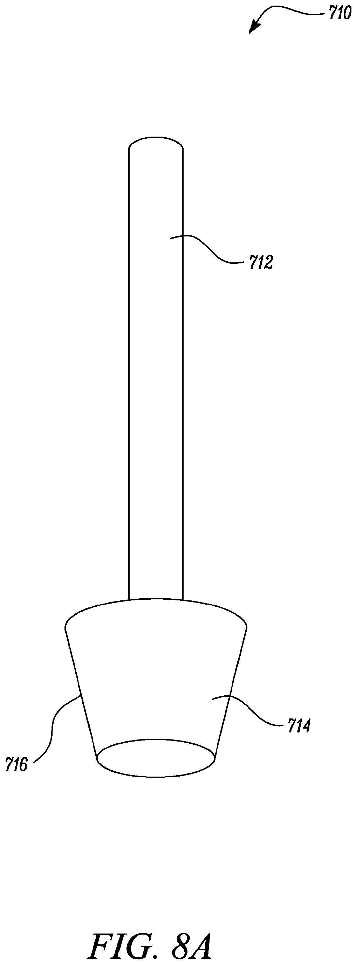

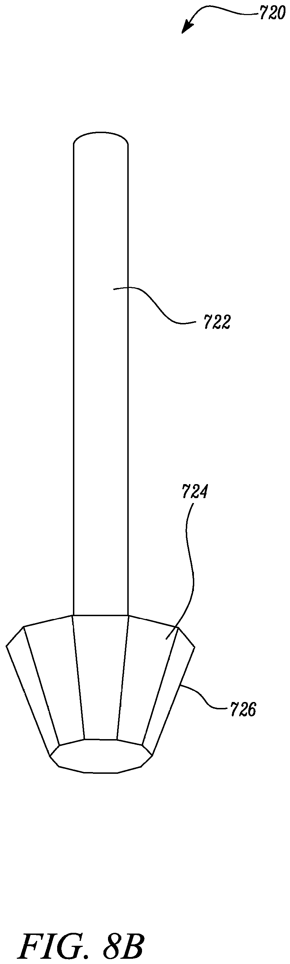

Figs. 8A and 8B illustrate perspective side views of exemplary flow restrictors 710, 720, respectively.

The flow restrictor 710 comprises a stem 712 and a head 714 extending from the stem 712. The flow restrictor 710 further comprises a restrictor sealing surface 716. Specifically, the head 714 of the flow restrictor 710 comprises the restrictor sealing surface 716. The flow restrictor 710 may be slidably received within the main channel 420 (shown in Fig. 5A). In some examples, a shape of the restrictor sealing surface 716 is substantially similar to a shape of the channel sealing surface 425 (shown in Fig. 5C). In the illustrated example of Fig. 8A, the restrictor sealing surface 716 has a frustoconical shape. Therefore, the flow restrictor 710 may be slidably received within the main channel 420 when the channel sealing surface 425 has a frustoconical shape.

The flow restrictor 720 comprises a stem 722 and a head 724 extending from the stem 722. The flow restrictor 720 may be slidably received within the main channel 420 (shown in Fig. 5A). The flow restrictor 720 further comprises a restrictor sealing surface 726. Specifically, the head 724 of the flow restrictor 720 comprises the restrictor sealing surface 726. In the illustrated example of Fig. 8B, the restrictor sealing surface 726 has a frustopyramidal shape.

The restrictor sealing surface 726 may have a cylindrical shape, a cuboidal shape, or any other suitable shape. The restrictor sealing surface 726 may correspond to a channel sealing surface of a nozzle body (for example, the nozzle bodies 110, 210, 310, 410) in which the flow restrictor 720 may be slidably received.

### Apparatus

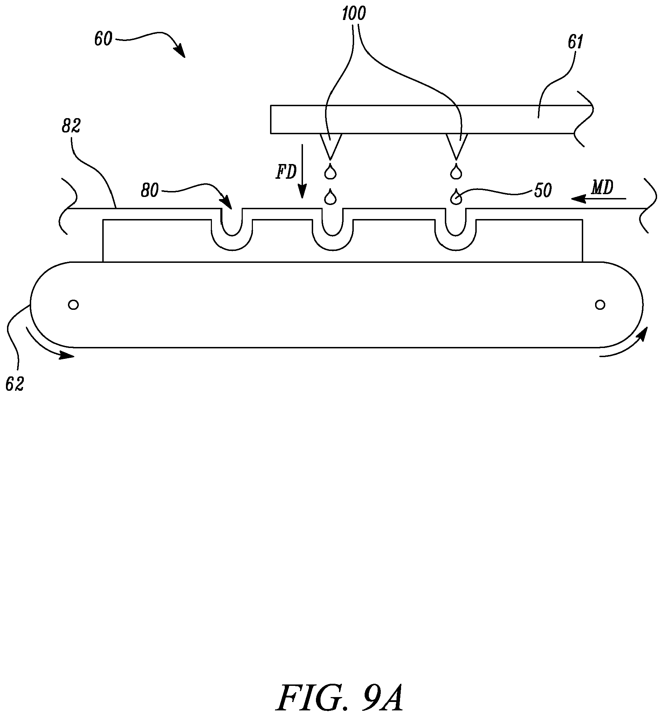

Fig. 9A illustrates a schematic side view of an apparatus 60 for manufacturing a water-soluble unit dose article comprising at least one dosing nozzle 100 (shown in Figs. 2A-2C) for dispensing the liquid composition 50. The apparatus 60 may comprise at least one dosing nozzle 200 (shown in Figs. 3A-3C), or at least one dosing nozzle 300 (shown in Figs. 4A-4C) for dispensing the liquid composition 50.

An open water-soluble film cavity 80 (hereinafter referred to as "the cavity 80") may be formed on a web 82 that is moveable in a machine direction MD, shown by the arrow marked MD. The web 82 may be continuously fed onto a moveable surface, for example, a conveyor belt, a drum, or a roll. In the illustrated example of Fig. 9A, the moveable surface comprises a horizontal conveyor belt 62. The apparatus 60 is positioned above the cavity 80. The cavity 80 may be of any cavity type suitable for receiving and holding the dispensed liquid composition 50 and typically has a closed bottom. The cavity 80 may be a depression on the web 82, preferably a web of film, more preferably a single web of film, which may be later sealed, preferably sealed with a second web, thereby forming a web of closed cavities. The cavity 80, or the web of sealed cavities may then be separated or divided, for example, by cutting, to form individual articles, for example, the water-soluble unit dose article.

The web 82 may comprise a water-soluble or a water-dispersible film, which may be formed and/or sealed to partially or completely envelop the liquid composition 50.

The water soluble film may be soluble or dispersible in water. Prior to be being formed into a unit dose article, the water-soluble film has in some examples a thickness of from 20 to 150 micron, in other examples 35 to 125 micron, in further examples 50 to 110 micron, in yet further examples about 76 micron. Example water soluble film materials comprise polymeric materials. The film material can, for example, be obtained by casting, blow-moulding, extrusion or blown extrusion of the polymeric material. In some examples, the water-soluble film comprises polyvinyl alcohol homopolymer or polyvinyl alcohol copolymer, for example a blend of polyvinylalcohol homopolymers and/or polyvinylalcohol copolymers. The polyvinyl alcohol copolymers preferably are selected from sulphonated and carboxylated anionic polyvinylalcohol copolymers especially carboxylated anionic polyvinylalcohol copolymers. The polymeric material can be for example a blend of a polyvinylalcohol homopolymer and a carboxylated anionic polyvinylalcohol copolymer, alternatively a blend of two or more preferably two polyvinyl alcohol homopolymers. The water-soluble film may also comprise plasticizers such as glycerin, diglycerin, sorbitol, ethylene glycol, diethylene glycol, triethylene glycol, tetraethylene glycol, propylene glycol, polyethylene glycols up to 400 MW, neopentyl glycol, trimethylolpropane, polyether polyols, sorbitol, 2-methyl-1,3-propanediol, ethanolamines, and a mixture thereof. In some examples water soluble films are those supplied by Monosol under the trade references M8630, M8900, M8779, M8310. In some examples the film may be opaque, transparent or translucent. The film may comprise a printed area. The area of print may be achieved using techniques such as flexographic printing or inkjet printing. The film may comprise an aversive agent, for example a bittering agent. Suitable bittering agents include, but are not limited to, naringin, sucrose octaacetate, quinine hydrochloride, denatonium benzoate, or mixtures thereof. Example levels of aversive agent include, but are not limited to, 1 to 5000ppm, 100 to 2500ppm, or 250 to 2000ppm. The water-soluble film or water-soluble unit dose article or both may be coated with a lubricating agent. In some examples, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins, or mixtures thereof.

In the illustrated example of Fig. 9A, multiple cavities 80 are aligned in the machine direction MD, forming a lane in the machine direction MD. Each lane may comprise from four to one hundred, or from ten to fifty, or from twenty to forty cavities 80. The cavity 80 may be arranged into from one to fifty, or from five to thirty, or from ten to sixteen lanes, typically arranged side-by-side and each moving, typically synchronously, in the machine direction MD

The at least one dosing nozzle 100 is aligned in the machine direction MD, and the at least one dosing nozzle 100 is configured to dispense the liquid composition 50 into the cavity 80 in a fill direction, shown by the arrow marked FD.

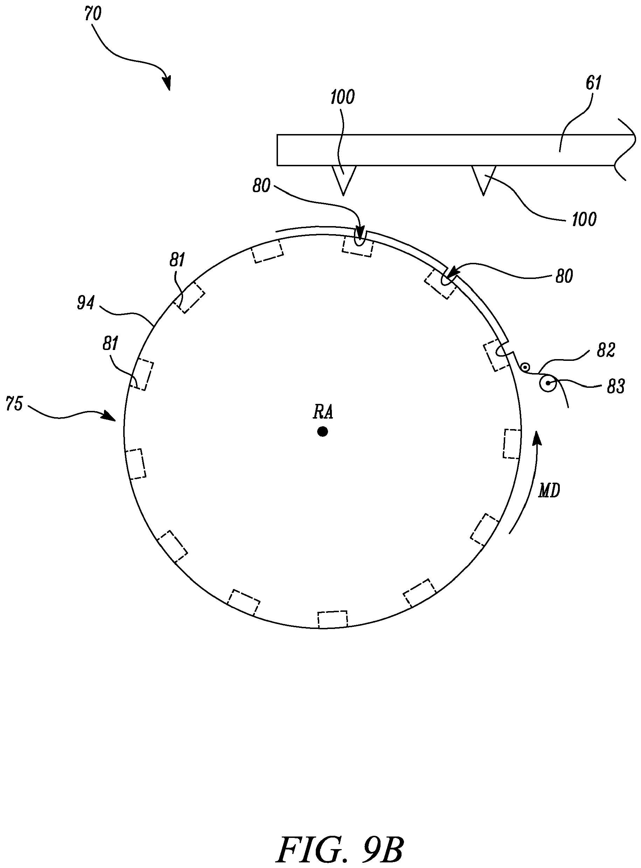

Fig. 9B illustrates a schematic side view of an apparatus 70 for manufacturing the water-soluble unit dose article comprising the at least one dosing nozzle 100 (shown in Figs. 2A-2C). The apparatus 70 may comprise the at least one dosing nozzle 200 (shown in Figs. 3A-3C), or the at least one dosing nozzle 300 (shown in Figs. 4A-C) for dispensing the liquid composition 50 (shown in Fig. 9A).

As discussed above, the cavity 80 is formed on the web 82 that is moveable in the machine direction MD, shown by the arrow marked MD. The web 82 may be continuously fed onto the moveable surface. In the illustrated example of Fig. 9B, the moveable surface comprises a rotary drum 75. The rotary drum 75 rotates in the machine direction MD around a rotational axis RA. The rotary drum 75 has a surface 94 positioned radially outward from the rotational axis RA. A plurality of moulds 81 are disposed on the surface 84 of the rotary drum 75. The web 82 is fed from a roll 83 onto the surface 94 of the rotary drum 64 and drawn into the moulds 81, forming the cavities 80. In the non-limiting illustration shown, the cavities 80 are circumferentially spaced and aligned to form a lane in the machine direction MD. The at least one dosing nozzle 100 is positioned above at least one cavity 80 when the at least one dosing nozzle 100 dispenses the liquid composition 50.

Referring to Figs. 9A and 9B, the apparatus 60 and the apparatus 70 may comprise a reciprocating arm 61. The reciprocating arm 61 may be attached to a manifold (not shown). The at least one dosing nozzle 100 may be connected to the manifold or directly to the reciprocating arm 61. The reciprocating arm 61 may be actuated by a linear actuator or motor.

The reciprocating arm 61 is typically coupled to the moveable surface (e.g., the conveyor belt 62 or the rotary drum 75), for example, mechanically or by software controls.

The reciprocating arm 61 may be returnable, i.e., moving in the machine direction MD and in a direction opposite the machine direction MD, and have a variable speed.

The at least one dosing nozzle 100 of the apparatus 60 or the apparatus 70 may move with a continuous motion on an endless surface, for example, a belt rotating surface. Typically, the at least one dosing nozzle 100 may move with the same speed as the at least one cavity 80 and in the same direction, such that at least one unfilled cavity is under the at least one dosing nozzle 100 during the dispensing of the liquid composition 50.

### Process

The present invention further encompasses a process for manufacturing the water-soluble unit dose article. The dosing nozzles 100, 200, 300 (shown in Figs. 2A-4C) may be used for manufacturing the water-soluble unit dose article. Specifically, the dosing nozzles 100, 200, 300 may be used to dispense the liquid composition 50 as described herein. The method will be described with reference to Figs. 1-9B. The process may comprise the step of: forming the open water-soluble film cavity 80 and filling the cavity 80 with the liquid composition 50 using a dosing nozzle according to the present invention. Specifically, the liquid composition 50 may be dispensed into the cavity 80 via at the least one dosing nozzle 100, 200, 300. The process will be described with reference to the dosing nozzle 100. However, the process may also be carried out by the dosing nozzle 200 or the dosing nozzle 300.

The process may comprise the step of moving the flow restrictor 150 between the closed position 154 and the open position 152, such that in the closed position 154, the flow restrictor 150 sealingly engages with the nozzle body 110 upstream of the plurality of orifices 140 to prevent the flow 52 of the liquid composition 50 from the main channel 120 to the plurality of orifices 140.

The present methods and systems may help to mitigate the stringing problem by the engagement of the flow restrictor 150 with the nozzle body 110 upstream of the plurality of orifices 140 to prevent the flow 52 of the liquid composition 50 from the main channel 120 to the plurality of orifices 140.

The liquid composition 50 is dispensed from the dosing nozzle 100 at a speed between 0.2 meter per second (m/s) to 10 m/s, and preferably between 1 m/s to 5 m/s. A single dosing volume may be between 1 milliliter (mL) and 50 mL, preferably 4 mL to 45 mL, and more preferably 15 mL to 40 mL.

An amount of set time chosen between when the flow restrictor 150 is in the open position 152 and when the flow restrictor 150 is in the closed position 154 may depend upon, but is not limited to, the rheological properties of the liquid composition 50, the geometry of the dosing nozzle 100, and the time response due to any inertia, including, but not limited to, mechanical inertia of the actuating cylinder rod 24 and fluid inertia of the liquid composition 50.

The web 82, e.g., the water-soluble film, may be formed into the cavity 80 that may form more than one compartment of the unit dose article. The compartments formed from the cavities 80 may in a side-by-side or a 'tire and rim' orientation. The second web may also comprise compartments, which may or may not comprise compositions. Alternatively, the second web may be a second closed pouch used to close the cavities that will form the multicompartment pouch.

The cavities 80 described herein may be formed into pouches, which may be unit dose articles.

The unit dose article may be made by thermoforming, vacuum-forming, or a combination thereof. The unit dose articles may be sealed using any suitable sealing method known in the art. Suitable sealing methods may include heat sealing, solvent sealing, pressure sealing, ultrasonic sealing, pressure sealing, laser sealing or a combination thereof. Examples of continuous in-line processes of manufacturing the water-soluble cavities are set forth in U.S. 7,125,828, U.S. 2009/0199877A1, EP 2380965, EP 2380966, U.S. 7,127,874 and US2007/0241022 (all to The Procter & Gamble Company, Ohio, USA). Examples of non-continuous in-line processes of manufacturing water-soluble cavities are set forth in U.S. 7,797,912 (to Reckitt Benckiser, Berkshire, GB).

The unit dose articles may be dusted with a dusting agent. Dusting agents can include talc, silica, zeolite, carbonate or mixtures thereof.

The unit dose articles may be printed thereon by any suitable method. Typically, a printable material (e.g., ink) is applied to the water soluble film. The printing may be performed before or after the film is formed into the unit dose article .

The present methods and systems provide particular benefits when dosing viscous compositions, which presents particular challenges. For example, accurate starts and stops of dosing are more difficult with high-viscosity liquids, in part due to stringing and dripping which occurs when filaments of the liquid composition 50 stretch from the dosing nozzle 100 to the cavity 80, or where filaments of the liquid composition 50 hang off of the dosing nozzle 100, after the liquid composition stops flowing at the end of the filling cycle.

### Composition

Typically, the liquid composition 50 is a household care composition. Non-limiting examples of suitable household care compositions include cleaning compositions, fabric care compositions, and hard surface cleaners. More particularly, the liquid compositions 50 may be a laundry, fabric care, or dish washing composition including pre-treatment or soaking compositions and other rinse additive compositions.

The liquid composition 50 may be a detergent composition. The detergent composition may be a fabric detergent composition or an automatic dish washing composition. The fabric detergent composition may be used during the main wash process or could be used as pre-treatment or soaking compositions.

The liquid detergent composition may be a Newtonian liquid having a viscosity value, at a shear rate of 1000 s⁻¹ and a temperature of 20 °C, of 100 centipoise (mPa*s) to 3000 centipoise, preferably 200 centipoise to 2000 centipoise, and more preferably 300 centipoise to 1000 centipoise.

The liquid detergent composition may be a non-Newtonian liquid having a high shear viscosity value, at a shear rate of 20 s⁻¹ and a temperature of 20 °C, of 100 centipoise to 3000 centipoise, preferably 300 centipoise to 2000 centipoise, and more preferably 500 centipoise to 1000 centipoise and a low shear viscosity value, at a shear rate of 1 s⁻¹ and a temperature of 20 °C, of 500 centipoise to 100000 centipoise, preferably 1000 centipoise to 10000 centipoise, and more preferably 1300 centipoise to 5000 centipoise.

Methods to measure viscosity are known in the art. According to the present invention, viscosity measurements are carried out using a rotational rheometer, e.g., TA instruments AR550. The instrument includes a 40 mm 2° or 1 ° cone fixture with a gap of around 50-60 micrometer (µm) for isotropic liquids, or a 40 mm flat steel plate with a gap of 1000 µm for particles containing liquids. The measurement is carried out using a flow procedure that contains a conditioning step, a peak hold, and a continuous ramp step. The conditioning step involves the setting of the measurement temperature at 20 °C, a pre-shear of 10 seconds at a shear rate of 10 s⁻¹, and an equilibration of 60 seconds (s) at the selected temperature. The peak hold involves applying a shear rate of 0.05 s⁻¹ at 20 °C for 3 min with sampling every 10s. The continuous ramp step is performed at a shear rate from 0.1 to 1200 s⁻¹ for 3 min at 20° C to obtain the full flow profile.

Fabric care compositions include fabric detergents, fabric softeners, 2-in-1 detergent and softening, pre-treatment compositions and the like. Fabric care compositions may comprise typical fabric care adjuncts, including surfactants, builders, chelating agents, dye transfer inhibiting agents, dispersants, enzymes, and enzyme stabilizers, catalytic materials, bleach activators, polymeric dispersing agents, clay soil removal/anti-redeposition agents, brighteners, suds suppressors, dyes, additional perfume and perfume delivery systems, structure elasticizing agents, fabric softeners, carriers, hydrotropes, processing aids, pigments, and mixtures thereof.

The liquid composition 50 may be a laundry detergent composition comprising an adjunct selected from the group comprising a shading dye, surfactant, polymers, perfumes, encapsulated perfume materials, structurant, and mixtures thereof.

The liquid composition 50 may be an automatic dish washing composition comprising an adjunct selected from surfactant, builder, sulfonated / carboxylated polymer, silicone suds suppressor, silicate, metal and/or glass care agent, enzyme, bleach, bleach activator, bleach catalyst, source of alkalinity, perfume, dye, organic or aqueous solvent, filler, and mixtures thereof.

The liquid composition 50 may comprise a surfactant. Surfactants can be selected from anionic, cationic, zwitterionic, non-ionic, amphoteric, or mixtures thereof. The liquid composition 50 may comprise anionic surfactant, non-ionic surfactant, or mixtures thereof. The anionic surfactant may be selected from linear alkyl benzene sulfonate, alkyl ethoxylate sulphate, and combinations thereof.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

### EXAMPLES

The following are exemplary water soluble unit dose formulations. The liquid composition 50 can be part of a single chamber water soluble unit dose article or can be split over multiple compartments resulting in below "averaged across compartments" full article composition. These liquid compositions 50 are dosed inside their respective cavities using a dosing nozzle according to the invention, as described herein.

**Table 1**

| ***Ingredients*** | Composition 1 (wt%) |
|---|---|
| Fatty alcohol ethoxylate non-ionic surfactant, C₁₂₋₁₄ average degree of ethoxylation of 7 | 3.8 |
| Lutensol XL100 | 0.5 |
| Linear C₁₁₋₁₄ alkylbenzene sulphonate | 24.6 |
| AE3S Ethoxylated alkyl sulphate with an average degree of ethoxylation of 3 | 12.5 |
| Citric acid | 0.7 |
| Palm Kernel Fatty acid | 5.3 |
| Nuclease enzyme* (wt% active protein) | 0.01 |
| Protease enzyme (wt% active protein) | 0.07 |
| Amylase enzyme (wt% active protein) | 0.005 |
| Xyloglucanese enzyme (wt% active protein) | 0.005 |
| Mannanase enzyme (wt% active protein) | 0.003 |
| Ethoxylated polyethyleneimine | 1.6 |
| Amphiphilic graft copolymer | 2.6 |
| Zwitterionic polyamine | 1.8 |
| Anionic polyester terephthalate | 0.6 |
| HEDP | 2.2 |
| Brightener 49 | 0.4 |
| Silicone anti-foam | 0.3 |
| Hueing dye | 0.05 |
| 1,2 PropaneDiol | 12.3 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |
| K2SO3 | 0.4 |
| MgCl2 | 0.3 |
| water | 10.8 |
| Hydrogenated castor oil | 0.1 |
| Perfume | 2.1 |
| Aesthetic dye & Minors | Balance to 100 |
| pH (10% product concentration in demineralized water at 20 °C) | 7.4 |

| | |
|---|---|
| *Nuclease enzyme is as claimed in co-pending European application 19219568.3 | |

The following is a multi-compartment water soluble unit dose laundry article comprising a larger bottom compartment while having two smaller compartments in a side by side configuration superposed on top of the bottom compartment, following the Ariel 3-in-1 Pods design, as commercially available in the UK in January 2020. The below liquid compositions 50 are enclosed in a polyvinyl alcohol based water soluble film, more specifically a water soluble film comprising a blend of a polyvinylalcohol homopolymer and a carboxylated anionic polyvinylalcohol copolymer. These liquid compositions 50 are dosed inside their respective cavities using a dosing nozzle according to the invention, as described herein.

**Table 2**

| ***Ingredients*** | Full article Composition (wt%) | Bottom compartment Composition (wt%) | Top compartment Composition 1 (wt%) | Top compartment Composition 2 (wt%) |
|---|---|---|---|---|
| Volume | 25.5ml | 22.3ml | 1.6ml | 1.6ml |
| Fatty alcohol ethoxylate non-ionic surfactant, C₁₂₋₁₄ average degree of ethoxylation of 7 | 3.5 | 3.7 | 2.6 | 1.6 |
| Lutensol XL100 | 0.4 | 0.5 | - | - |
| Linear C₁₁₋₁₄ alkylbenzene sulphonate | 24.2 | 24.9 | 18.9 | 19.4 |
| AE3S Ethoxylated alkyl sulphate with an average degree of ethoxylation of 3 | 12.3 | 12.6 | 9.7 | 9.7 |
| Citric acid | 0.7 | 0.7 | 0.5 | 0.5 |
| Palm Kernel Fatty acid | 5.2 | 5.4 | 4.1 | 4.1 |
| Nuclease enzyme* (wt% active protein) | 0.009 | 0.011 | - | - |
| Protease enzyme (wt% active protein) | 0.05 | 0.06 | - | - |
| Amylase enzyme (wt% active protein) | 0.004 | 0.005 | - | - |
| Xyloglucanese enzyme (wt% active protein) | 0.005 | - | 0.073 | - |
| Mannanase enzyme (wt% active protein) | 0.003 | 0.003 | - | - |
| Lipase enzyme (wt% active protein) | 0.012 | - | 0.187 | - |
| Ethoxylated polyethyleneimine | 1.5 | 1.6 | 1.2 | 1.2 |
| Amphiphilic graft copolymer | 2.0 | 2.3 | - | - |
| Zwitterionic polyamine | 1.8 | 1.9 | 1.4 | 1.4 |
| Anionic polyester terephthalate | 0.4 | - | - | 5.8 |
| HEDP | 2.2 | 2.2 | 1.7 | 1.7 |
| Brightener 49 | 0.3 | 0.4 | 0.01 | 0.01 |
| Silicone anti-foam | 0.3 | 0.3 | - | - |
| Hueing dye | 0.04 | - | 0.69 | - |
| 1,2 PropaneDiol | 13.6 | 12.8 | 11.3 | 26.4 |
| Glycerine | 6.0 | 5.0 | 17.3 | 8.3 |
| DPG (DiPropyleneGlycol) | 0.8 | 0.8 | 0.6 | 0.6 |
| TPG (TriPropyleneGlycol) | 0.06 | 0.06 | - | - |
| Sorbitol | 0.6 | 0.05 | 8.8 | - |
| Monoethanolamine | 10.0 | 10.4 | 7.9 | 8.0 |
| K2SO3 | 0.4 | 0.4 | 0.04 | 0.4 |
| MgCl2 | 0.3 | 0.3 | 0.2 | 0.2 |
| water | 10.9 | 10.9 | 11.8 | 9.9 |
| Hydrogenated castor oil | 0.1 | 0.1 | - | 0.1 |
| Perfume | 1.6 | 1.9 | - | - |
| Aesthetic dye & Minors (incl. preservative) | Balance to 100 | Balance to 100 | Balance to 100 | Balance to 100 |
| pH (10% product concentration in demineralized water at 20 °C) | 7.4 | 7.4 | 7.4 | 7.4 |

| | | | | |
|---|---|---|---|---|
| *Nuclease enzyme is as claimed in co-pending European application 19219568.3 | | | | |

### COMPARATIVE EXAMPLE

The following example is offered for illustrative purposes only and is not intended to limit the scope of the claims in any way. Indeed, various modifications of the disclosure in addition to those shown and described herein will become apparent to those skilled in the art from the foregoing description and the following examples and fall within the scope of the appended claims.

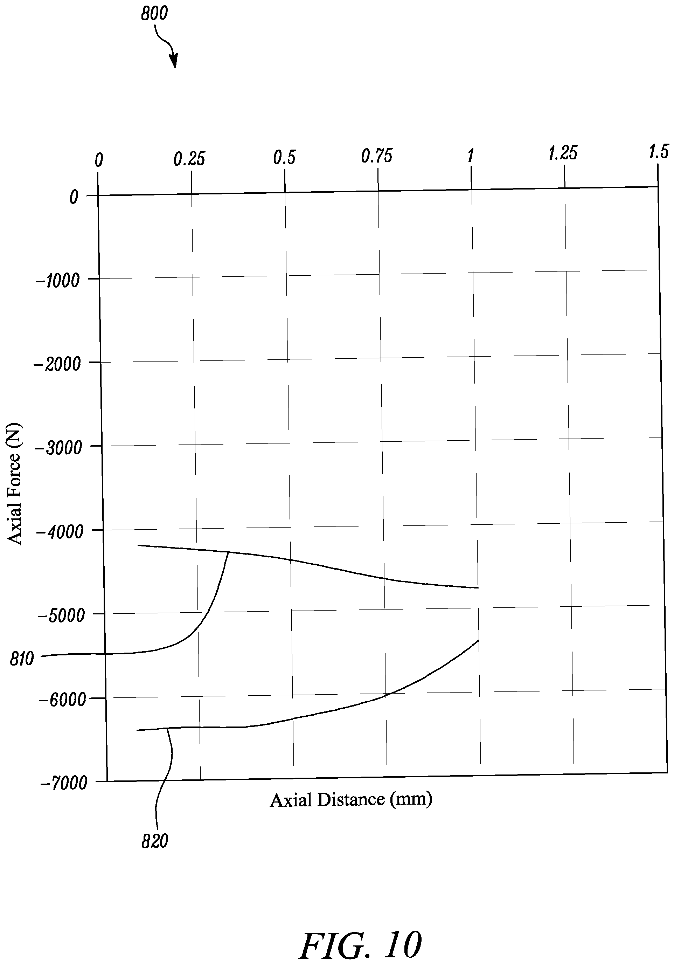

Fig. 10 illustrates a plot 800 depicting an axial force versus an axial distance of a stopper of a conventional nozzle and a flow restrictor (e.g., the flow restrictor 250) of a dosing nozzle (e.g., the dosing nozzle 200) of the present invention, when a hydraulic pressure of 5 bar was applied. The axial distance is expressed in millimeters (mm) in the abscissa. The axial force is expressed in Newton (N) in the ordinate. The plot 800 was obtained from simulation models run on the conventional nozzle and the dosing nozzle of the present invention using computational fluid dynamics (CFD) software.

The conventional nozzle comprised a large number of nozzle openings. Specifically, the conventional nozzle comprised 18 nozzle openings. Further, the nozzle openings had a high aspect ratio, i.e., a length of each nozzle opening was substantially greater than a width of the nozzle opening. On the other hand, the dosing nozzle of the present invention comprised a substantially lesser number of a plurality of orifices (e.g., the plurality of orifices 240). Specifically, the dosing nozzle of the present invention comprised 4 orifices. Further, the plurality of orifices had a low aspect ratio, i.e., a width of each orifice was greater than a length of the orifice.

The axial distance for the conventional nozzle represents a distance between a tip of the stopper and an inner surface (i.e., a sealing surface of the conventional nozzle) of a nozzle tip wall comprising the nozzle openings. The axial distance for the dosing nozzle of the present invention represents a distance between a proximal end (e.g., the proximal end 258) of the flow restrictor and an end of a nozzle sealing surface (e.g., the channel sealing surface 225) proximal to the plurality orifices.

The plot 800 comprises a curve 810 depicting the axial force on the flow restrictor as a function of the axial distance when the hydraulic pressure of 5 bar was applied in the dosing nozzle of the present invention. The plot 800 further comprises a curve 820 depicting the axial force on the stopper as a function of the axial distance when the hydraulic pressure of 5 bar was applied in the conventional nozzle.

As is apparent from the plot 800, the axial force on the stopper of the conventional nozzle was substantially greater than the axial force on the flow restrictor of the dosing nozzle of the present invention when the axial distance was from about 0 mm to 1 mm. The axial distance of 0 mm may correspond to an axial distance in a closed position of each of the stopper and the flow restrictor. The axial distance greater than 0 mm and less than or equal to 1 mm may correspond to an axial distance between an open position and the closed position of each of the stopper and the flow restrictor. Therefore, the conventional nozzle required a greater axial force to move the stopper from the closed position to the open position than the dosing nozzle of the present invention required to move the flow restrictor from the closed position to the open position. Further, the axial force required by the conventional nozzle to move the stopper from the closed position to the open position may cause the conventional nozzle to block and burst supply hoses due to overpressure. Since, a lesser axial force was required to move the flow restrictor of the dosing nozzle of the present invention between the open position and the closed position, the dosing nozzle of the present invention may mitigate such issues caused due to overpressure.

### Examples/Combinations

A. A dosing nozzle for dispensing a liquid composition, the dosing nozzle comprising:
   a nozzle body defining a main channel extending at least partially along a longitudinal axis of the nozzle body and configured to receive the liquid composition therein, the nozzle body further comprising a tip wall disposed at a tip of the nozzle body, the tip wall defining a plurality of orifices extending therethrough and disposed in fluid communication with the main channel, wherein the plurality of orifices is configured to receive the liquid composition from the main channel and dispense the liquid composition from the dosing nozzle; and
   a flow restrictor slidably received within the main channel and movable between a closed position and an open position, wherein, in the closed position, the flow restrictor sealingly engages with the nozzle body upstream of the plurality of orifices to prevent a flow of the liquid composition from the main channel to the plurality of orifices.
B. The dosing nozzle according to paragraph A, wherein the nozzle body comprises a channel sealing surface at least partially defining the main channel and extending from the tip wall, the channel sealing surface being parallel to or inclined obliquely to the longitudinal axis, wherein the flow restrictor comprises a restrictor sealing surface, and wherein, in the closed position, the restrictor sealing surface of the flow restrictor sealingly engages with the channel sealing surface of the nozzle body.
C. The dosing nozzle according to paragraph B, wherein a maximum width of the restrictor sealing surface is between 5 mm and 20 mm.
D. The dosing nozzle according to paragraph C, wherein an average width of the main channel is greater than the maximum width of the restrictor sealing surface, preferably the average width of the main channel is between 5 mm and 20 mm, and more preferably between 7 mm and 12 mm.
E. The dosing nozzle according to any one of paragraphs B to D, each of the channel sealing surface and the restrictor sealing surface tapers inwardly along the longitudinal axis in a direction towards the tip wall.
F. The dosing nozzle according to paragraph E, each of the channel sealing surface and the restrictor sealing surface has a frustoconical shape or a frustopyramidal shape, preferably frustoconical shape.
G. The dosing nozzle according to any one of paragraphs B to D, wherein each of the channel sealing surface and the restrictor sealing surface extends parallel to the longitudinal axis.
H. The dosing nozzle according to any one of paragraphs A to G, wherein the nozzle body comprises a main nozzle portion defining at least partially the main channel, and a tip portion connected, preferably detachably, to the main nozzle portion, the tip portion comprising the tip wall.
I. The dosing nozzle according to any one of paragraphs A to H, wherein, in the closed position, a proximal end of the flow restrictor is axially spaced apart from the tip wall by a distance of between 0.2 mm and 5 mm.
J. The dosing nozzle according to any one of paragraphs A to I, where an average width of each orifice is between 2 mm and 10 mm, and preferably between 3 mm to 6 mm.
K. The dosing nozzle according to any one of paragraphs A to J, where a length of each orifice along the longitudinal axis is between 0.5 mm and 5 mm.
L. The dosing nozzle according to any one of paragraphs A to K, wherein a number of the plurality of orifices is less than or equal to six.
M. The dosing nozzle according to any one of paragraphs A to L, further comprising a nozzle inlet disposed in fluid communication with the main channel and configured to discharge the liquid composition within the main channel, wherein the flow restrictor sealingly engages with the nozzle body downstream of the nozzle inlet.
N. The dosing nozzle according to any one of paragraphs A to M, wherein a total surface area of each orifice is between 5 mm² and 200 mm².
O. The dosing nozzle according to any one of paragraphs A to N, wherein a shape of one or more orifices from the plurality of orifices is selected from semicircular, quadrant, circular sector, oval, elliptical, superelliptical, square, rectangular, triangular, polygonal, or a combination thereof.
P. The dosing nozzle according to any one of paragraphs A to O, wherein the plurality of orifices comprises a central orifice and a plurality of peripheral orifices surrounding the central orifice.
Q. The dosing nozzle according to any one of paragraphs A to P, wherein the plurality of orifices are arranged concentrically about the longitudinal axis of the nozzle body.
R. The dosing nozzle according to any one of paragraphs A to Q, wherein the plurality of orifices comprises a plurality of angular circular sectors separated from each other by respective separating segments extending radially relative to the longitudinal axis of the nozzle body.
S. An apparatus for manufacturing a water-soluble unit dose article comprising at least one dosing nozzle according to any one of paragraphs A to R.
T. A process for manufacturing a water-soluble unit dose article comprising the step of forming an open water-soluble film cavity and filling the cavity with a liquid composition, wherein the liquid composition is dispensed into the cavity via at least one dosing nozzle according to any one of paragraphs A to R.
U. The process according to paragraph T, wherein the liquid composition is received within the main channel at a pressure greater than 0 bar and less than or equal to 10 bar.
V. The process according to any one of paragraphs T to U, wherein the liquid composition is dispensed from the dosing nozzle at a speed between 0.2 m/s to 10 m/s, and preferably between 1 m/s to 5 m/s.
W. The process according to any one of paragraphs T to V, wherein a single dosing volume is between 1 mL and 50 mL, preferably 4 mL to 45 mL, and more preferably 15 mL to 40 mL.
X. The process according to any one of paragraphs T to W, wherein the liquid composition is a detergent composition.
Y. The process according to any one of paragraphs T to X, wherein the liquid detergent composition is a Newtonian liquid having a viscosity value, at a shear rate of 1000 s⁻¹ and a temperature of 20°C, of 100 cP to 3000 cP, preferably 200 cP to 2000 cP, and more preferably 300 cP to 1000 cP.
Z. The process according to any one of paragraphs T to X, wherein: the liquid detergent composition is a non-Newtonian liquid having:
   a high shear viscosity value, at a shear rate of 20 s⁻¹ and a temperature of 20°C, of 100 cP to 3000 cP, preferably 300 cP to 2000 cP, and more preferably 500 cP to 1000 cP; and
   a low shear viscosity value, at a shear rate of 1 s⁻¹ and a temperature of 20°C, of 500 cP to 100000 cP, preferably 1000 cP to 10000 cP, and more preferably 1300 cP to 5000 cP.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

## Claims

1. A dosing nozzle (100, 200, 300) for dispensing a liquid composition (50), the dosing nozzle (100, 200, 300) comprising:
a nozzle body (110, 210, 310) defining a main channel (120, 220, 320) extending at least partially along a longitudinal axis (102, 202, 302) of the nozzle body (110, 210, 310) and configured to receive the liquid composition (50) therein, the nozzle body (110, 210, 310) further comprising a tip wall (130, 230, 330) disposed at a tip (132, 232, 332) of the nozzle body (110, 210, 310), the tip wall (130, 230, 330) defining a plurality of orifices (140, 240, 340) extending therethrough and disposed in fluid communication with the main channel (120, 220, 320), wherein the plurality of orifices (140, 240, 340) is configured to receive the liquid composition (50) from the main channel (120, 220, 320) and dispense the liquid composition (50) from the dosing nozzle (100, 200, 300); and
a flow restrictor (150, 250, 350) slidably received within the main channel (120, 220, 320) and movable between a closed position (154, 254, 354) and an open position (152, 252, 352), wherein, in the closed position (154, 254, 354), the flow restrictor (150, 250, 350) sealingly engages with the nozzle body (110, 210, 310) upstream of the plurality of orifices (140, 240, 340) to prevent a flow (52) of the liquid composition (50) from the main channel (120, 220, 320) to the plurality of orifices (140, 240, 340).

2. The dosing nozzle (100, 200, 300) according to claim 1, wherein the nozzle body (110, 210, 310) comprises a channel sealing surface (125, 225, 325) at least partially defining the main channel (120, 220, 320) and extending from the tip wall (130, 230, 330), the channel sealing surface (125, 225, 325) being parallel to or inclined obliquely to the longitudinal axis (102, 202, 302), wherein the flow restrictor (150, 250, 350) comprises a restrictor sealing surface (155, 255, 355), and wherein, in the closed position (154, 254, 354), the restrictor sealing surface (155, 255, 355) of the flow restrictor (150) sealingly engages with the channel sealing surface (125, 225, 325) of the nozzle body (110, 210, 310).

3. The dosing nozzle (100, 200, 300) according to claim 2, wherein a maximum width (156, 256, 356) of the restrictor sealing surface (155, 255, 355) is between 5 mm and 20 mm.

4. The dosing nozzle (100, 200, 300) according claim 3, wherein an average width (142, 242, 342) of the main channel (120, 220, 320) is greater than the maximum width (156, 256, 356) of the restrictor sealing surface (155, 255, 355), preferably wherein the average width (142, 242, 342) of the main channel (120, 220, 320) is between 5 mm and 20 mm, and more preferably between 7 mm and 12 mm.

5. The dosing nozzle (100, 200, 300) according to any one of claims 2 to 4, each of the channel sealing surface (125, 225, 325) and the restrictor sealing surface (155, 255, 355) tapers inwardly along the longitudinal axis (102, 202, 302) in a direction (104, 204, 304) towards the tip wall (130, 230, 330).

6. The dosing nozzle (100, 200) according to claim 5, each of the channel sealing surface (125, 225, 325) and the restrictor sealing surface (155, 255, 355) has a frustoconical shape or a frustopyramidal shape, preferably the frustoconical shape.

7. The dosing nozzle (300) according to any one of claims 2 to 4, wherein each of the channel sealing surface (125, 225, 325) and the restrictor sealing surface (155, 255, 355) extends parallel to the longitudinal axis (102, 202, 302).

8. The dosing nozzle (100, 200, 300) according to any one of the preceding claims, wherein the nozzle body (110, 210, 310) comprises a main nozzle portion (112, 212, 312) defining at least partially the main channel (120, 320, 420), and a tip portion (114, 214, 314) connected, preferably detachably, to the main nozzle portion (112, 212, 312), the tip portion (114, 214, 314) comprising the tip wall (130, 230, 330).

9. The dosing nozzle (100, 200, 300) according to any one of the preceding claims, wherein, in the closed position (152, 252, 352), a proximal end (158, 258, 358) of the flow restrictor (150, 250, 350) is axially spaced apart from the tip wall (130, 230, 330) by a distance (159, 259, 359) of between 0.2 mm and 5 mm.

10. The dosing nozzle (100, 200, 300) according to any one of the preceding claims, wherein an average width (142, 242, 342) of each orifice (140, 240, 340) is between 2 mm and 10 mm, and preferably between 3 mm to 6 mm.

11. The dosing nozzle (100, 200, 300) according to any one of the preceding claims, wherein a length (144, 244, 344) of each orifice (140, 240, 340) along the longitudinal axis (102, 202, 302) is between 0.5 mm and 5 mm.

12. The dosing nozzle (100, 200, 300) according to any one of the preceding claims, wherein a number of the plurality of orifices (140, 240, 340) is less than or equal to six.

13. The dosing nozzle (100, 200, 300) according to any one of the preceding claims, further comprising a nozzle inlet (106) disposed in fluid communication with the main channel (120, 220, 320) and configured to discharge the liquid composition (50) within the main channel (120, 220, 320), wherein the flow restrictor (150, 250, 350) sealingly engages with the nozzle body (110, 220, 320) downstream of the nozzle inlet (106).

14. An apparatus (60, 70) for manufacturing a water-soluble unit dose article comprising at least one dosing nozzle (100, 200, 300) according to any one of the preceding claims.

15. A process for manufacturing a water-soluble unit dose article comprising the step of forming an open water-soluble film cavity (80) and filling the cavity (80) with a liquid composition (50), wherein the liquid composition (50) is dispensed into the cavity (80) via at least one dosing nozzle (100, 200, 300) according to any one of claims 1 to 13.
